(19) Europäisches Patentamt
European Patent Office
Office européen des brevets

(11) **EP 4 708 928 A1**

(12) **EUROPEAN PATENT APPLICATION**

(43) Date of publication:
**11.03.2026 Bulletin 2026/11**

(21) Application number: **25199952.0**

(22) Date of filing: **03.09.2025**

(51) International Patent Classification (IPC):
***H04W 4/20*** (2018.01)    ***H04W 4/38*** (2018.01)
***H04W 4/40*** (2018.01)

(52) Cooperative Patent Classification (CPC):
**H04W 4/40; G08G 1/00; G08G 1/0112;**
**G08G 1/0175; H04W 4/20; H04W 4/38**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH LA MA MD TN**

(30) Priority: **04.09.2024 KR 20240120066**

(71) Applicant: **LG Electronics Inc.**
**Yeongdeungpo-gu**
**Seoul 07336 (KR)**

(72) Inventor: **KIM, Myoungseob**
**06772 Seoul (KR)**

(74) Representative: **Mooser, Sebastian Thomas**
**Wuesthoff & Wuesthoff**
**Patentanwälte und Rechtsanwalt PartG mbB**
**Schweigerstraße 2**
**81541 München (DE)**

(54) **METHOD AND DEVICE FOR PERFORMING COMMUNICATION IN A WIRELESS COMMUNICATION SYSTEM**

(57)     Provided are a method for performing wireless communication by a first device, and an apparatus for supporting same. The method may include: obtaining, by a first device, from a second device, first sensing data; obtaining, by the first device, second sensing data; obtaining, by the first device, based on the second sensing data, information related to an event; and determining, by the first device, based on the first sensing data, whether the event is valid. For example, the first sensing data may include a system managing at least one of area information, location information, or object information.

EP 4 708 928 A1

**Description**

**TECHNICAL FIELD**

This disclosure relates to a wireless communication system.

**BACKGROUND**

5G NR is a successor technology to long term evolution (LTE) and is a new clean-slate mobile communication system with characteristics such as high performance, low latency, high availability, etc. 5G NR may utilize all available spectrum resources, including low-frequency bands below 1 GHz, mid-frequency bands between 1 GHz and 10 GHz, high-frequency (millimeter wave) bands above 24 GHz, etc.

A 6G (wireless communication) system has purposes such as (i) very high data rate per device, (ii) a very large number of connected devices, (iii) global connectivity, (iv) very low latency, (v) decrease in energy consumption of battery-free IoT devices, (vi) ultra-reliable connectivity, (vii) connected intelligence with machine learning capacity, etc. The vision of the 6G system may include four aspects such as intelligent connectivity, deep connectivity, holographic connectivity and ubiquitous connectivity, and the 6G system may satisfy the requirements shown in Table 1 below. That is, Table 1 shows the requirements of the 6G system.

[Table 1]

| Per device peak data rate | 1 Tbps |
|---|---|
| E2E latency | 1 ms |
| Maximum spectral efficiency | 100bps/Hz |
| Mobility support | Up to 1000km/hr |
| Satellite integration | Fully |
| AI | Fully |
| Autonomous vehicle | Fully |
| XR | Fully |
| Haptic Communication | Fully |

**SUMMARY**

Based on an embodiment, a method may be provided. For example, the method may include: obtaining, by a first device, from a second device, first sensing data; obtaining, by the first device, second sensing data; obtaining, by the first device, based on the second sensing data, information related to an event; and determining, by the first device, based on the first sensing data, whether the event is valid. For example, the first sensing data may include a system managing at least one of area information, location information, or object information.

Based on an embodiment, a first device may be provided. For example, the first device may include: at least one transceiver; at least one processor; and at least one memory connected to the at least one processor and storing instructions, and the instructions, based on being executed by the at least one processor, may cause the first device to perform operations comprising: obtaining, from a second device, first sensing data; obtaining, second sensing data; obtaining, based on the second sensing data, information related to an event; and determining, based on the first sensing data, whether the event is valid. For example, the first sensing data may include a system managing at least one of area information, location information, or object information.

Based on an embodiment, a processing device (adapted to control a first device) may be provided. For example, the processing device may include: at least one processor; and at least one memory connected to the at least one processor and storing instructions, and the instructions, based on being executed by the at least one processor, may cause a first device to perform operations comprising: obtaining, from a second device, first sensing data; obtaining, second sensing data; obtaining, based on the second sensing data, information related to an event; and determining, based on the first sensing data, whether the event is valid. For example, the first sensing data may include a system managing at least one of area information, location information, or object information.

Based on an embodiment, a non-transitory computer-readable storage medium storing instructions may be provided. For example, the instructions, based on being executed, may cause a first device to perform operations comprising: obtaining, from a second device, first sensing data; obtaining, second sensing data; obtaining, based on the second sensing data, information related to an event; and determining, based on the first sensing data, whether the event is valid. For example, the first sensing data may include a system managing at least one of area information, location information, or object information.

Based on an embodiment, a method may be provided. For example, the method may include: transmitting, by a second device, to a first device, first sensing data; and receiving, by the second device, from the first device, a report of information related to an event related to second sensing data. For example, the event may be received based on that the event is determined to be valid. For example, the validity of the event is determined based on the transmitted first sensing data.

Based on an embodiment, a second device may be provided. For example, the second device may include: at least one transceiver; at least one processor; and at least one memory connected to the at least one processor and storing instructions, and the instructions, based on being executed by the at least one processor, may cause the second device to perform operations comprising: transmitting, to a first device, first sensing data; and receiving, from the first device, a report of information related to an event related to second sensing data. For example, the event may be received based on that the event is determined to be valid. For example, the validity of the event is determined based on the transmitted first sensing data.

Based on an embodiment, a processing device may be provided. For example, the processing device may include: at least one processor; and at least one memory connected to the at least one processor and storing instructions, and the instructions, based on being executed by the at least one processor, may cause a second device to perform operations comprising: transmitting, to a first device, first sensing data; and receiving, from the first device, a report of information related to an event related to second sensing data. For example, the event may be received based on that the event is determined to be valid. For example, the validity of the event is determined based on the transmitted first sensing data.

Based on an embodiment, a non-transitory computer-readable storage medium storing instructions may be provided. For example, the instructions, based on being executed, may cause a second device to perform operations comprising: transmitting, to a first device, first sensing data; and receiving, from the first device, a report of information related to an event related to second sensing data. For example, the event may be received based on that the event is determined to be valid. For example, the validity of the event is determined based on the transmitted first sensing data.

## BRIEF DESCRIPTION OF THE DRAWINGS

FIG. 1 shows an inter-device communication procedure, based on an embodiment of the present disclosure.
FIG. 2 shows a radio protocol architecture, based on an embodiment of the present disclosure.
FIG. 3 shows a structure of a radio frame, based on an embodiment of the present disclosure.
FIG. 4 shows a slot structure of a frame, based on an embodiment of the present disclosure.
FIG. 5 shows an example of a BWP, based on an embodiment of the present disclosure.
FIG. 6 shows a communication architecture available in a 6G system, based on an embodiment of the present disclosure.
FIG. 7 shows an example of a communication scenario based on a 6G system, based on an embodiment of the present disclosure.
FIGS. 8a and 8b show non-terrestrial network (NTN) scenarios, based on an embodiment of the present disclosure.
FIG. 9 shows an example of a sensing operation, based on an embodiment of the present disclosure.
FIG. 10 shows a relationship among radar cross-section (RCS), distance (D), and power, based on an embodiment of the present disclosure.
FIG. 11 shows an example of protocol layers used to support LTE positioning protocol (LPP) message transfer between a location management function (LMF) and a UE, based on an embodiment of the present disclosure.
FIG. 12 shows examples of ISAC services, based on an embodiment of the present disclosure.
FIG. 13 shows various integrated sensing and communication (ISAC) systems, based on an embodiment of the present disclosure.
FIG. 14 is a diagram for explaining a comparison between V2X communication based on a RAT prior to NR and V2X communication based on NR, based on an embodiment of the present disclosure.
FIG. 15 shows a procedure in which a first device determines validity of an event, based on an embodiment of the present disclosure.
FIG. 16 shows a method for a first device to perform wireless communication, based on an embodiment of the present disclosure.
FIG. 17 shows a method for a second device to perform wireless communication, based on an embodiment of the present disclosure.

FIG. 18 shows a communication system 1, based on an embodiment of the present disclosure.

FIG. 19 shows wireless devices, based on an embodiment of the present disclosure.

FIG. 20 shows a signal process circuit for a transmission signal, based on an embodiment of the present disclosure.

FIG. 21 shows another example of a wireless device, based on an embodiment of the present disclosure.

FIG. 22 shows a hand-held device, based on an embodiment of the present disclosure.

## DETAILED DESCRIPTION

In the present disclosure, "A or B" may mean "only A", "only B", or "both A and B". In other words, in the present disclosure, "A or B" may be interpreted as "A and/or B". For example, in the present disclosure, "A, B or C" may mean "only A", "only B", "only C", or "any combination of A, B and C".

In the present disclosure, a slash (/) or a comma may mean "and/or". For example, "A/B" may mean "A and/or B". Accordingly, "A/B" may mean "only A", "only B", or "both A and B". For example, "A, B, C" may mean "A, B or C".

In the present disclosure, "at least one of A and B" may mean "only A", "only B", or "both A and B". In addition, the expressions "at least one of A or B" and "at least one of A and/or B" in the present disclosure may be interpreted in the same manner as "at least one of A and B".

In addition, in the present disclosure, "at least one of A, B and C" may mean "only A", "only B", "only C", or "any combination of A, B and C". In addition, "at least one of A, B or C" and "at least one of A, B and/or C" may mean "at least one of A, B and C".

In addition, parentheses used in the present disclosure may mean "for example". Specifically, when indicated as "control information (PDCCH)", "PDCCH" may be proposed as an example of "control information". In other words, the "control information" of the present disclosure is not limited to "PDCCH", and "PDCCH" may be proposed as an example of "control information". Likewise, when indicated as "control information (for example, PDCCH)", "PDCCH" may be proposed as an example of "control information".

In the following description, "when, if, in case of" may be replaced with "based on".

In the present disclosure, technical features that are described individually within a single drawing may be implemented individually, or may be implemented simultaneously.

In the present disclosure, a higher layer parameter may be a parameter that is configured for a UE, pre-configured, or predefined. For example, a base station (BS) or a network may configure higher layer parameters for a user equipment (UE). For example, higher layer parameters may be configured through radio resource control (RRC) signaling or medium access control (MAC) signaling.

In the present disclosure, that something is "configured or defined" may be interpreted as being configured or pre-configured for a device through predefined signaling (e.g., system information block (SIB), medium access control (MAC), radio resource control (RRC), downlink control information (DCI)) from a base station (BS) or a network. In the present disclosure, that something is "configured or defined" may be interpreted as being configured or pre-configured for a device through predefined signaling (e.g., medium access control (MAC), radio resource control (RRC), sidelink control information (SCI), control information signaled in device-to-device signaling) from another device. In the present disclosure, that something is "configured or defined" may be interpreted as being pre-configured for a device.

In the present disclosure, a user equipment (UE) may refer to a device, a portable device, a wireless apparatus, and the like. In the present disclosure, a base station (BS) may refer to a radio access network (RAN) node, a non-terrestrial network (NTN) cell/node, a transmission reception point (TRP), a network, an integrated access and backhaul (IAB) node, a device, a portable device, a wireless apparatus, and the like.

The technology described below may be used in various wireless communication systems such as code division multiple access (CDMA), frequency division multiple access (FDMA), time division multiple access (TDMA), orthogonal frequency division multiple access (OFDMA), single carrier frequency division multiple access (SC-FDMA), and so on. The CDMA may be implemented with a radio technology, such as universal terrestrial radio access (UTRA) or CDMA2000. The TDMA may be implemented with a radio technology, such as global system for mobile communications (GSM)/general packet ratio service (GPRS)/enhanced data rate for GSM evolution (EDGE). The OFDMA may be implemented with a radio technology, such as institute of electrical and electronics engineers (IEEE) 802.11 (Wi-Fi), IEEE 802.16 (WiMAX), IEEE 802-20, evolved UTRA (E-UTRA), long term evolution (LTE), 5G NR, and so on.

The technology proposed in the present disclosure may be implemented as 6G wireless technology and may be applied to various 6G systems. For example, the 6G system may have key factors such as enhanced mobile broadband (eMBB), ultra-reliable low latency communications (URLLC), massive machine type communications (mMTC), artificial intelligence (AI) integrated communication, tactile internet, high throughput, high network capacity, high energy efficiency, low backhaul and access network congestion, and enhanced data security.

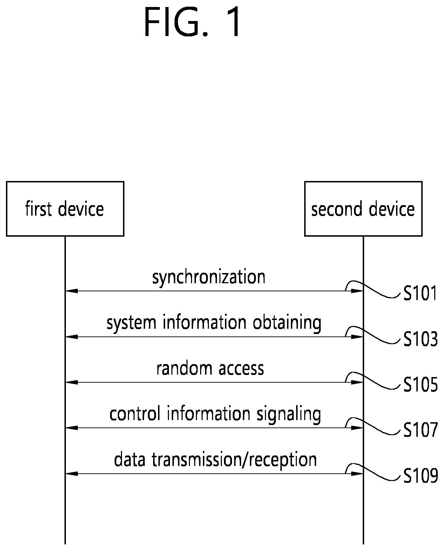

FIG. 1 shows an inter-device communication procedure, based on an embodiment of the present disclosure. The embodiment of FIG. 1 may be combined with various embodiments of the present disclosure, and among the above embodiments, some description, functions, procedures, proposals, methods, and/or operations may be omitted.

Referring to FIG. 1, in step S101, a first device and a second device may perform synchronization. For example, the first device may be a user equipment (UE) and/or at least one of the devices proposed in the present disclosure. For example, the second device may be at least one of a base station (BS), a network, a radio access network (RAN) node, a non-terrestrial network (NTN) node/cell, a transmission reception point (TRP), a UE, and/or a device proposed in the present disclosure. For example, the first device may perform an initial cell search operation. For example, the first device may detect at least one synchronization signal transmitted according to a rule pre-configured by the second device. Here, for example, the synchronization signal may include a plurality of synchronization signals classified according to structure or purpose (e.g., a primary synchronization signal, a secondary synchronization signal). Through this, the first device may identify a boundary of a frame, a subframe, a time unit, a slot, and/or a symbol of the second device, and the first device may obtain information (e.g., a cell identifier) of the second device.

In step S103, the first device may obtain system information transmitted by the second device. For example, system information may include information related to attributes, characteristics, and/or capabilities of the second device that are required to access the second device and use services. For example, system information may be classified according to content (e.g., whether it is essential for access) and transmission structure (e.g., which channel is used, whether it is provided on-demand). For example, system information may be classified into a master information block (MIB) and system information blocks (SIBs). For example, if necessary, the first device may transmit a signal requesting system information prior to receiving the system information. For example, requesting and providing system information may be performed after a random access procedure described below.

In step S105, the first device and the second device may perform a random access procedure. For example, based on information related to a random access channel of the second device obtained through the system information (e.g., a channel position, a channel structure, a structure of supported preambles), the first device may transmit and/or receive at least one message for the random access procedure (e.g., a random access preamble, a random access response message). For example, the first device may transmit a preamble (e.g., Msg1) over a random access channel, may receive a random access response message (e.g., Msg2), may, by using scheduling information included in the random access response message, transmit to the second device a message (e.g., Msg3) including information related to the first device (e.g., identification information), and may receive a message (e.g., Msg4) for contention resolution and/or connection establishment. For example, Msg1 and Msg3 may be transmitted and received as one message (e.g., MsgA) and/or Msg2 and Msg4 may be transmitted and received as one message (e.g., MsgB).

In step S107, the first device and the second device may perform signaling of control information. Here, for example, control information may be defined in various layers such as a layer controlling connections (e.g., a radio resource control (RRC) layer), a layer that handles mapping between logical channels and transport channels (e.g., a medium access control (MAC) layer), and a layer that handles physical channels (e.g., a physical (PHY) layer). For example, the first device and the second device may perform at least one of signaling for establishing a connection, signaling for determining configuration related to communication, and signaling for indicating allocated resources. For example, control information may be signaled/transmitted over a control channel. For example, control information and/or a control channel may be used for scheduling data, a data channel (e.g., a shared channel), and/or control information on a data channel.

In step S109, the first device and the second device may transmit and/or receive data. For example, the first device and the second device may process data based on signaling of control information, and may transmit and/or receive the data. For example, when transmitting data, the first device or the second device may perform at least one of channel encoding for information bits, rate matching, scrambling, constellation mapping, layer mapping, waveform modulation, antenna mapping, and/or resource mapping. For example, when receiving data, the first device or the second device may perform at least one of signal extraction from a resource, waveform demodulation per antenna, signal placement considering layer mapping, constellation demapping, descrambling, and/or channel decoding.

For example, layers of a radio interface protocol between the first device and the second device may be divided into layer 1 (L1), layer 2 (L2), layer 3 (L3), and the like. For example, a physical layer belonging to layer 1 (L1) may provide an information transfer service using physical channels, and a radio resource control (RRC) layer located at layer 3 (L3) may perform a role of controlling radio resources between the first device and the second device. To this end, for example, the radio resource control (RRC) layer may exchange RRC messages between the first device and the second device.

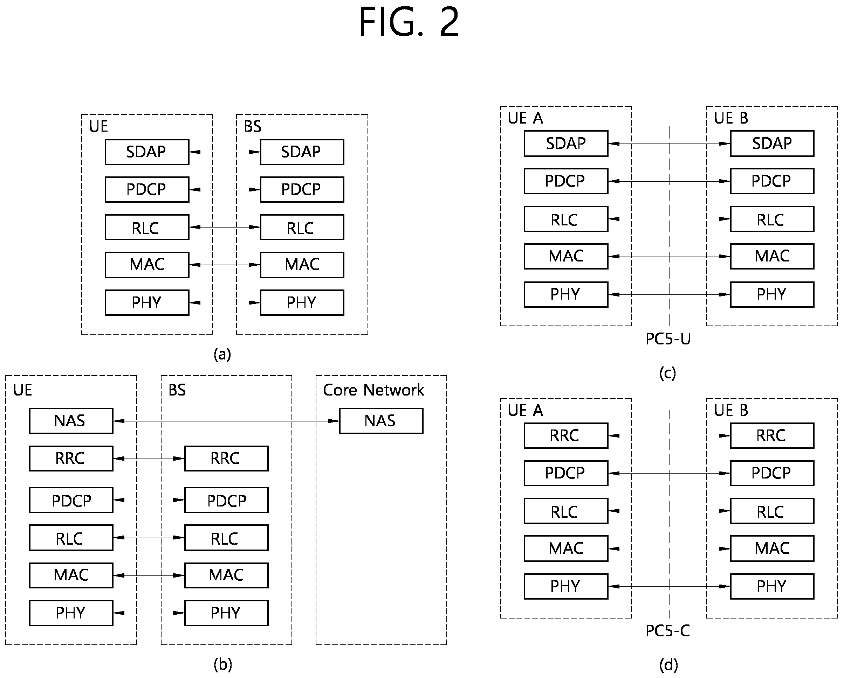

FIG. 2 shows a radio protocol architecture, based on an embodiment of the present disclosure. The embodiment of FIG. 2 may be combined with various embodiments of the present disclosure, and among the above embodiments, some description, functions, procedures, proposals, methods, and/or operations may be omitted. For example, (a) of FIG. 2 may show a radio protocol stack of a user plane for uplink communication or downlink communication, and (b) of FIG. 2 may show a radio protocol stack of a control plane for uplink communication or downlink communication. For example, (c) of FIG. 2 may show a radio protocol stack of a user plane for device-to-device communication, and (d) of FIG. 2 may show a radio protocol stack of a control plane for device-to-device communication.

For example, the physical layer may provide an information transfer service to an upper layer by using physical channels. For example, the physical layer may be connected to a medium access control (MAC) layer, which is an upper layer, through transport channels. For example, data may be delivered between the medium access control (MAC) layer and the physical layer through transport channels. For example, transport channels may be classified according to how data is transmitted over a radio interface and with what characteristics. For example, data may be transmitted between different physical layers, for example, between the physical layers of the first device and the second device, through physical channels. For example, the physical channels may be modulated by an orthogonal frequency division multiplexing (OFDM) scheme, and time and frequency may be used as radio resources.

For example, the medium access control (MAC) layer may provide a service to a radio link control (RLC) layer, which is an upper layer, through logical channels. For example, the medium access control (MAC) layer may provide a mapping function from a plurality of logical channels to a plurality of transport channels. For example, the medium access control (MAC) layer may provide a logical channel multiplexing function by mapping from a plurality of logical channels to a single transport channel. For example, a MAC sublayer may provide a data transfer service on logical channels.

For example, the radio link control (RLC) layer may perform concatenation, segmentation, and reassembly of radio link control (RLC) service data units (SDUs). For example, to guarantee various quality of service (QoS) required by radio bearers (RBs), the radio link control (RLC) layer may provide three operation modes: a transparent mode (TM), an unacknowledged mode (UM), and an acknowledged mode (AM). For example, the acknowledged mode (AM) radio link control (RLC) may provide error correction through automatic repeat request (ARQ).

For example, a radio resource control (RRC) layer may be defined only in the control plane. For example, the radio resource control (RRC) layer may be responsible for control of logical channels, transport channels, and physical channels in relation to configuring, re-configuring, and releasing radio bearers (RBs). For example, a radio bearer (RB) may mean a logical path provided by a layer 1 (L1) (e.g., physical layer) and a layer 2 (L2) (e.g., medium access control (MAC) layer, radio link control (RLC) layer, packet data convergence protocol (PDCP) layer, service data adaptation protocol (SDAP) layer, or data delivery between the first device and the second device.

For example, functions of a packet data convergence protocol (PDCP) layer in the user plane may include delivery of user data, header compression, and ciphering. For example, functions of a packet data convergence protocol (PDCP) layer in the control plane may include delivery of control plane data and ciphering/integrity protection.

For example, that a radio bearer (RB) is configured may mean a process that specifies characteristics of radio protocol layers and channels and configures specific parameters and operation methods for providing a particular service. For example, radio bearers (RBs) may be divided into a signaling radio bearer (SRB) and a data radio bearer (DRB). For example, a signaling radio bearer (SRB) may be used as a path for transmitting radio resource control (RRC) messages in the control plane, and a data radio bearer (DRB) may be used as a path for transmitting user data in the user plane.

For example, when an RRC connection is established between an RRC layer of a UE and an RRC layer of a BS, the UE may be in an RRC_CONNECTED state; otherwise, the UE may be in an RRC_IDLE state. For example, in NR, an RRC_INACTIVE state is additionally defined, and a UE in the RRC_INACTIVE state may maintain a connection with a core network while releasing a connection with a BS.

For example, downlink transport channels may include at least one of a broadcast channel (BCH) that transmits system information and a downlink shared channel (SCH) that transmits, in addition to that, user traffic or control messages. For traffic or control messages of a downlink multicast or broadcast service, transmission may be performed through a downlink shared channel (SCH), or may be performed through a separate multicast channel (MCH). Meanwhile, uplink transport channels may include at least one of a random access channel (RACH) that transmits initial control messages and an uplink shared channel (SCH) that transmits, in addition to that, user traffic or control messages. For example, logical channels located over transport channels and mapped to transport channels may include at least one of a broadcast control channel (BCCH), a paging control channel (PCCH), a common control channel (CCCH), a multicast control channel (MCCH), and/or a multicast traffic channel (MTCH).

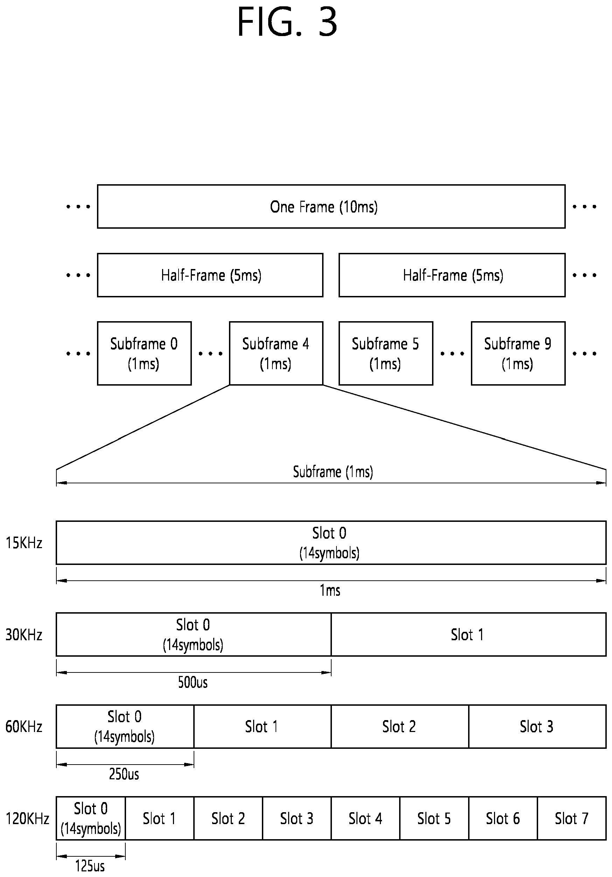

FIG. 3 shows a structure of a radio frame, based on an embodiment of the present disclosure. The embodiment of FIG. 3 may be combined with various embodiments of the present disclosure, and among the above embodiments, some description, functions, procedures, proposals, methods, and/or operations may be omitted.

Referring to FIG. 3, for example, a radio frame may be used in uplink transmission, downlink transmission, and/or device-to-device transmission. For example, a radio frame may have a length of 10 ms and may be defined as two 5 ms half-frames (HFs). For example, a half-frame may include five 1 ms subframes (SFs). For example, a subframe may be divided into one or more slots, and the number of slots in a subframe may be determined according to a subcarrier spacing (SCS). For example, each slot may include 12 or 14 orthogonal frequency division multiplexing (OFDM(A)) symbols depending on a cyclic prefix (CP).

For example, when a normal CP is used, each slot may include 14 symbols. For example, when an extended CP is used, each slot may include 12 symbols. Here, for example, the symbols may include OFDM symbols (or CP-OFDM symbols), SC-FDMA (single carrier-FDMA) symbols (or DFT-s-OFDM (Discrete Fourier Transform-spread-OFDM) symbols).

Table 2 below illustrates, when a normal CP or an extended CP is used, the number of symbols per slot ($N^{slot}_{symb}$), the number of slots per frame ($N^{frame,u}_{slot}$), and the number of slots per subframe ($N^{subframe,u}_{slot}$) according to an SCS configuration (u).

[Table 2]

| CP type | SCS (15*2^u) | $N^{slot}_{symb}$ | $N^{frame,u}_{slot}$ | $N^{subftame,u}_{slot}$ |
|---|---|---|---|---|
| normal CP | 15kHz (u=0) | 14 | 10 | 1 |
| | 30kHz (u=1) | 14 | 20 | 2 |
| | 60kHz (u=2) | 14 | 40 | 4 |
| | 120kHz (u=3) | 14 | 80 | 8 |
| | 240kHz (u=4) | 14 | 160 | 16 |
| extended CP | 60kHz (u=2) | 12 | 40 | 4 |

For example, among a plurality of cells aggregated to one UE, OFDM(A) numerologies (e.g., SCS, CP length, etc.) may be configured differently. Accordingly, absolute-time intervals of time resources (e.g., subframes, slots, or a transmit time interval (TTI)) consisting of the same number of symbols may be configured differently among the aggregated cells. For example, in the present disclosure, time resources such as subframes, slots, and TTI may be referred to as time units.

For example, multiple numerologies or SCS configurations may be supported to support various services. For example, when the SCS is 15 kHz, a wide area in traditional cellular bands may be supported, and when the SCS is 30 kHz/60 kHz, dense-urban, lower latency, and wider carrier bandwidth may be supported. For example, when the SCS is 60 kHz or higher, a bandwidth greater than 24.25 GHz may be supported to overcome phase noise.

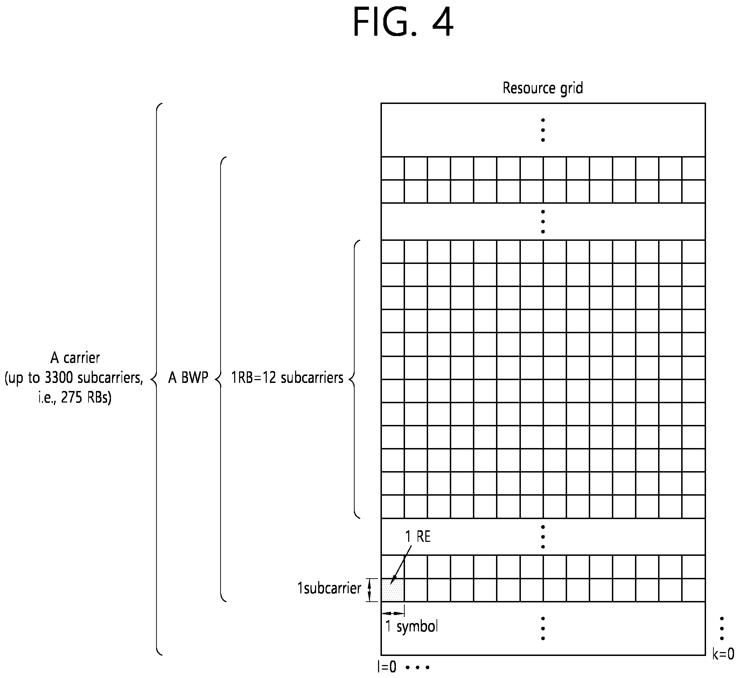

FIG. 4 shows a slot structure of a frame, based on an embodiment of the present disclosure. The embodiment of FIG. 4 may be combined with various embodiments of the present disclosure, and among the above embodiments, some description, functions, procedures, proposals, methods, and/or operations may be omitted.

Referring to FIG. 4, for example, a slot may include a plurality of symbols in a time domain. For example, a carrier may include a plurality of subcarriers in a frequency domain. For example, a resource block (RB) may be defined by a plurality of consecutive subcarriers in a frequency domain. For example, a bandwidth part (BWP) may be defined by a plurality of consecutive (physical) resource block ((P)RB) in a frequency domain and may correspond to one numerology (e.g., SCS, CP length, etc.). For example, a carrier may include up to N (where N is a positive int BWP. For example, data communication may be performed through an active BWP. For example, each element may be referred to as a resource element (RE) on a resource grid, and one complex symbol may be mapped.

For example, a BWP may be a consecutive set of PRB in a given numerology. For example, a PRB may be selected, on a given carrier, from a consecutive subset of common resource block (CRB) for a given numerology.

For example, a BWP may be at least one of an active BWP, an initial BWP, and/or a default BWP. For example, a UE may not monitor downlink (DL) radio link quality on a DL BWP other than an active DL BWP on a primary cell (PCell). For example, a UE may not receive a physical downlink control channel (PDCCH), a physical downlink shared channel (PDSCH), or a channel state information-reference signal (CSI-RS) outside an active DL BWP (except for radio resource management (RRM)). For example, a UE may not trigger channel state information (CSI) reporting for an inactive DL BWP. For example, a UE may not transmit a physical uplink control channel (PUCCH) or a physical uplink shared channel (PUSCH) outside an active uplink (UL) BWP. For DL, an initial BWP may be given as a consecutive resource block (RB) set for a control resource set (CORESET) of remaining minimum system information (RMSI) configured by a physical broadcast channel (PBCH). For UL, an initial BWP may be given by a system information block (SIB) for a random access procedure. For example, a default BWP may be configured by a higher layer. For example, an initial value of the default BWP may be the initial DL BWP. For energy saving, if a UE fails to detect downlink control information (DCI) for a specific period, the UE may switch its active BWP to the default BWP.

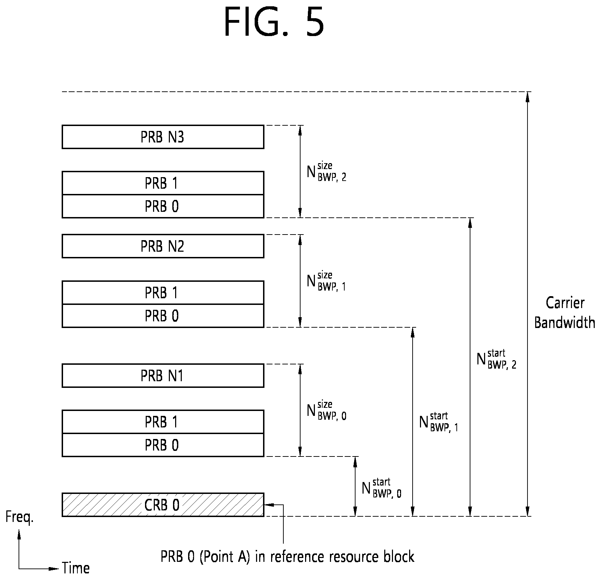

FIG. 5 shows an example of a BWP, based on an embodiment of the present disclosure. The embodiment of FIG. 5 may be combined with various embodiments of the present disclosure, and among the above embodiments, some description, functions, procedures, proposals, methods, and/or operations may be omitted. In the embodiment of FIG. 5, it is assumed that there are three BWP.

Referring to FIG. 5, for example, a common resource block (CRB) may be a carrier resource block numbered from one end of a carrier band to the other end, and a PRB may be a resource block numbered within each BWP. For example, point A may indicate a common reference point for a resource block grid.

For example, a BWP may be configured by point A, an offset ($N^{start}_{BWP}$) from point A, and a bandwidth ($N^{size}_{BWP}$). For example, point A may be an external reference point of a PRB of a carrier where subcarrier 0 is aligned for all numerologies (e.g., all numerologies supported by the network on the carrier). For example, an offset may be a PRB spacing between a lowest subcarrier in a given numerology and point A. For example, a bandwidth may be a number of PRB in a given numerology.

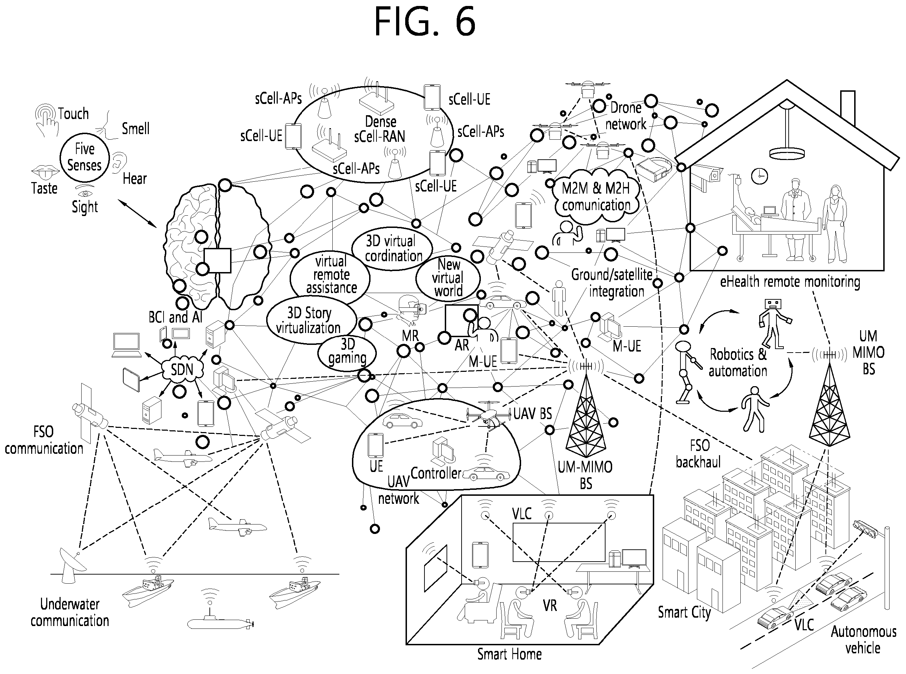

FIG. 6 shows a communication architecture available in a 6G system, based on an embodiment of the present disclosure. The embodiment of FIG. 6 may be combined with various embodiments of the present disclosure, and among the above embodiments, some description, functions, procedures, proposals, methods, and/or operations may be omitted.

As key implementation technologies of the 6G system, artificial intelligence (AI), terahertz (THz) communication, optical wireless technology, free-space optical (FSO) backhaul network, multiple input multiple output (MIMO) technology, block-chain, 3D networking, quantum communication, unmanned aerial vehicles, cell-free communication, wireless information and energy transfer (WIET), integration of sensing and communication, integration of access backhaul networks, holographic beamforming, big data analytics, and large intelligent surface (LIS) may be adopted.

- Artificial intelligence (AI): Introducing AI into communication may simplify and enhance real-time data transmission. AI may determine how complex tasks are performed by using numerous analyses. For example, AI may improve efficiency and reduce processing delay. Time-consuming tasks such as handover, network selection, and resource scheduling may be performed immediately by using AI. AI may also play an important role in machine-to-machine (M2M), machine-to-human, and human-to-machine communications. In addition, AI may be used for rapid communication in brain computer interface (BCI). AI-based communication systems may be supported by metamaterials, intelligent structures, intelligent networks, intelligent devices, intelligent cognitive radios, self-sustaining wireless networks, and machine learning

- Terahertz (THz) communication: A data transmission rate may be increased by increasing bandwidth. This may be performed by using sub-THz communication with wide bandwidth and applying advanced massive MIMO technology. THz waves, also known as radiation below millimeter waves, generally refer to a frequency band between 0.1 THz and 10 THz, having a wavelength in the range of 0.03 mm to 3 mm. A 100 GHz-300 GHz band range (sub-THz band) is considered a main part of the THz band for cellular communication. Adding the sub-THz band to the mmWave band increases the 6G cellular communication capacity. A 300 GHz-3 THz band among the defined THz bands lies in the infrared (IR) frequency band. The 300 GHz-3 THz band is part of the optical band but at its boundary, and immediately after the RF band, thereby showing similarity to RF. Main characteristics of THz communication include (i) widely available bandwidth to support very high data rates and (ii) high path loss occurring at high frequencies (necessitating highly directional antennas). A narrow beam width generated by highly directional antennas reduces interference. A small wavelength of THz signals enables a much larger number of antenna elements to be integrated into devices and BSs operating in this band. Through this, advanced adaptive array technologies may be used to overcome range limitations.

- Massive MIMO technology (large-scale MIMO)
- Hologram beamforming (HBF)
- Optical wireless technology
- Free space optical (FSO) backhaul network
- Quantum communication
- Cell-free communication
- Integration of wireless information and power transmission
- Integration of wireless communication and sensing
- Integrated access and backhaul network
- Big data analysis
- Reconfigurable intelligent surface
- Metaverse
- Block-chain
- Advanced air mobility (AAM): AAM may be a broad concept encompassing urban air mobility (UAM), regional air mobility (RAM), and uncrewed aerial system (UAS). For example, AAM may include UAM, RAM, UAS, and uncrewed aerial vehicle (UAV).
- Autonomous driving: As a core element in establishing an autonomous driving infrastructure, vehicle-to-everything (V2X) enables vehicles to communicate and share with various elements on roads for autonomous driving, such as vehicle-to-vehicle (V2V) and vehicle-to-infrastructure (V2I) wireless communication.
- Non-terrestrial network (NTN): NTN may refer to a network or network segment that uses radio frequency (RF) resources mounted on satellites (or UAS platforms). NTN services may be considered to provide wireless communication services in order to secure wider coverage or in places where it is not easy to install wireless communication base stations (BSs).
- Integrated sensing and communication (ISAC): Wireless sensing is a technology that can obtain information related to characteristics of an environment and/or an object within the environment by identifying instantaneous radial velocity, angle, and distance (range) of the object using radio frequencies.

- Reconfigurable intelligent surface (RIS): RIS may be used to manipulate and enhance signal propagation in a wireless communication environment. For example, an RIS may be composed of many small antennas or metasurfaces arranged on a surface, and each small antenna may actively adjust phase, amplitude, and polarization of reflected signals. For example, an RIS may improve signal reception by adjusting paths, phases, and/or strengths of propagated signals. For example, since only adjustment of phases and amplitudes of small antennas consumes power in RIS, power consumption may be very low. For example, RIS may be reconfigured according to different environments, thereby satisfying various communication requirements and operating effectively in dynamic network environments.

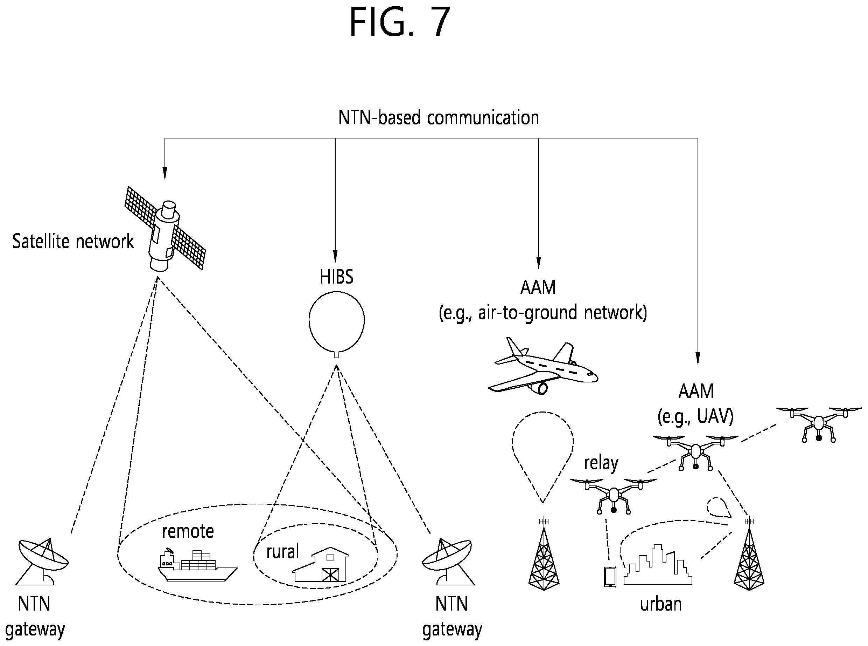

FIG. 7 shows an example of a communication scenario based on a 6G system, based on an embodiment of the present disclosure. The embodiment of FIG. 7 may be combined with various embodiments of the present disclosure, and among the above embodiments, some description, functions, procedures, proposals, methods, and/or operations may be omitted.

Referring to FIG. 7, non-terrestrial network (NTN) communication may be performed based on a satellite network, high-altitude platform stations (HIBS) as international mobile telecommunications (IMT) base stations (BSs), and UEs capable of aerial communication (e.g., advanced air mobility (AAM)). For example, to enhance coverage, devices such as satellite networks, HIBS, and UEs capable of aerial communication (e.g., AAM) may perform a relay role. For example, an AAM may perform communication with a BS, a satellite network, and the like, and/or an AAM may perform direct communication with a UE, another AAM, and the like.

For example, a UE may obtain information related to characteristics of an environment and/or an object within the environment by identifying instantaneous radial velocity, angle, and distance (range) of the object using radio frequency sensing. Since a wireless frequency sensing function does not require connecting an object through a device within the network, a service for identifying an object location may be provided without a device. A function of obtaining range, velocity, and angle information from radio frequency signals may provide various new functions such as object detection, object recognition (e.g., vehicle, human, animal, UAV), high-precision positioning, tracking, and activity recognition. Wireless sensing services may provide information to various industries (e.g., unmanned aerial vehicle, smart home, V2X, factory, railway, public safety, etc.) that enable applications such as intruder detection, assisted driving and navigation, trajectory tracking, collision avoidance, traffic management, health management, and the like. In some cases, non-3GPP type sensors (e.g., radar, camera) may be used to additionally support 3GPP-based sensing. For example, an operation of wireless sensing, e.g., a sensing operation, may depend on transmission, reflection, and scattering processing of a wireless sensing signal. Accordingly, wireless sensing may provide an opportunity to strengthen an existing communication system into a wireless communication and sensing network in a communication network.

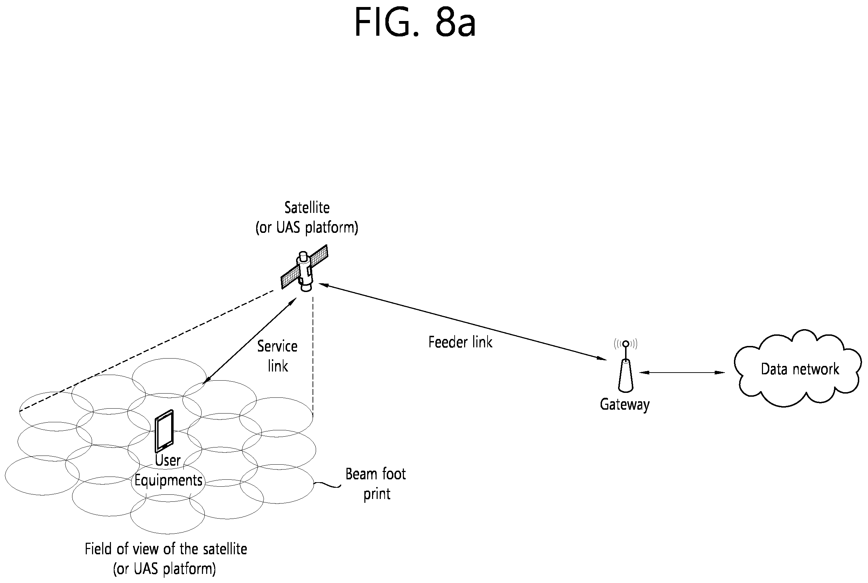

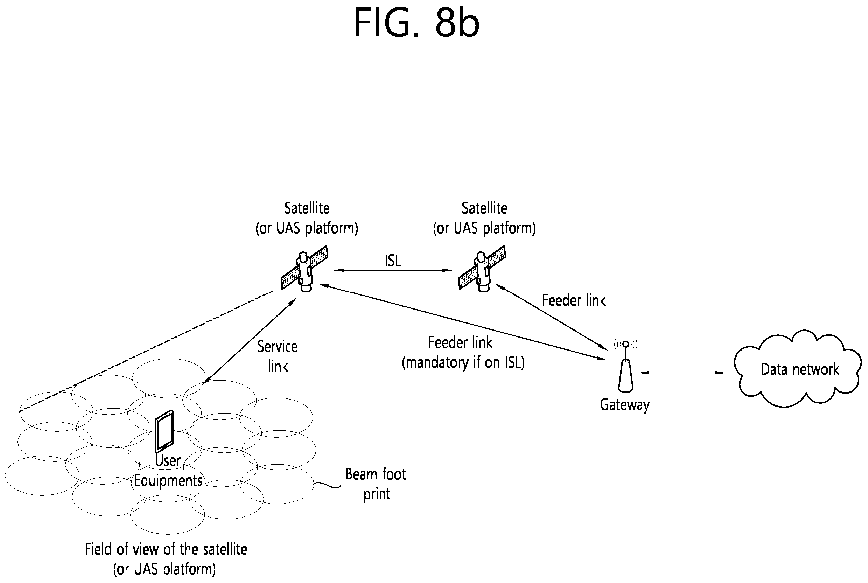

FIGS. 8a and 8b show non-terrestrial network (NTN) scenarios, based on an embodiment of the present disclosure. The embodiments of FIGS. 8a and 8b may be combined with various embodiments of the present disclosure, and among the above embodiments, some description, functions, procedures, proposals, methods, and/or operations may be omitted.

FIG. 8a shows an NTN scenario based on a transparent payload, and FIG. 8b shows an NTN scenario based on a regenerative payload. For example, an NTN may generally include the following elements.

- one or more satellite gateways connecting the NTN to a public data network;
- a feeder link or wireless link between a satellite gateway and a satellite (or UAS platform);
- a service link or wireless link between user equipment (UE) and a satellite (or UAS platform);
- a satellite (or UAS platform) that can implement a transparent or regenerative payload (including onboard processing). For example, the satellite (or UAS platform) may generally generate multiple beams across a given service area bounded by line of sight. For example, a beam footprint may generally be elliptical. For example, the line of sight of a satellite (or UAS platform) may vary according to an onboard antenna diagram and a minimum elevation angle. For example, for a transparent payload, radio frequency filtering, frequency conversion, and amplification may be performed, and thus a repeated waveform signal in the payload may not be changed. For example, for a regenerative payload, radio frequency filtering, frequency conversion, and amplification, and demodulation/decoding, switching and/or routing, and coding/modulation may be performed. This may effectively be the same as mounting all BS functions on the satellite (or UAS platform).
- optionally, an inter-satellite link (ISL);
- a UE may be served by a satellite (or UAS platform) within a target service area.

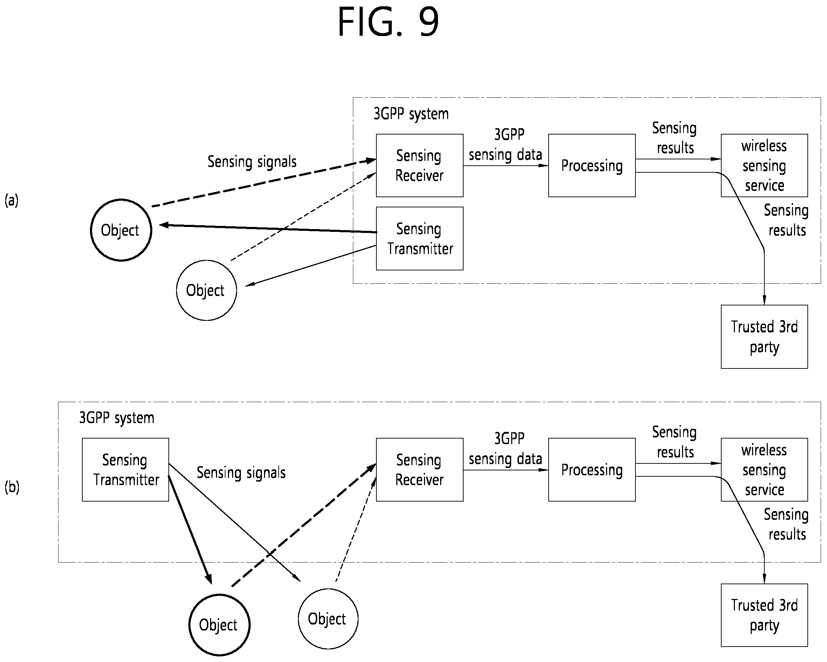

FIG. 9 shows an example of a sensing operation, based on an embodiment of the present disclosure. The embodiment of FIG. 9 may be combined with various embodiments of the present disclosure, and among the above embodiments, some description, functions, procedures, proposals, methods, and/or operations may be omitted. Specifically, (a) of FIG. 9 shows an example of monostatic sensing using a sensing receiver and a sensing transmitter located at the same position, and (b) of FIG. 9 shows an example of bistatic sensing using a separated sensing receiver and sensing transmitter.

Referring to FIG. 9, a sensing transmitter may transmit a sensing signal for sensing one or more objects (and/or an environment around the object). For example, the sensing signal may be a radio (frequency) signal defined to be transmittable by a BS/UE. For example, a sensing receiver may receive a scattered/reflected signal by one or more objects (and/or an environment around the object) from the sensing signal transmitted by the sensing transmitter. For example, in the sensing receiver, sensing data may be derived from the scattered/reflected signal, and sensing results may be generated/obtained through processing of the sensing data. Here, for example, the sensing results may include characteristic information (e.g., position, distance, velocity, angle, etc.) of one or more objects (and/or an environment around the object). For example, sensing results thus generated/obtained may be used for wireless sensing services (e.g., detection, tracking of objects and/or environment) or provided/disclosed to a trusted third party.

For example, a sensing transmitter may be a BS or a UE that transmits a sensing signal to be used for operating a sensing service, and the sensing transmitter may be located in the same or a different BS or UE as the sensing receiver. For example, a sensing receiver may be a BS or a UE that receives a sensing signal to be used for operating a sensing service, and the sensing receiver may be located in the same or a different BS or UE as the sensing transmitter. For example, a sensing target may be an object whose characteristics within an environment are to be derived from a sensing signal. For example, a background environment may be clutter or environmental objects that are not sensing targets. For example, an environment object may be an object other than a sensing target whose position is known. For example, monostatic sensing may be sensing in which the sensing transmitter and the sensing receiver coexist in the same BS or UE. For example, bistatic sensing may be sensing in which the sensing transmitter and the sensing receiver are located in different BSs or UEs. For example, multistatic sensing may be sensing in which there are a plurality of sensing transmitters and/or a plurality of sensing receivers for a (single) sensing target. For example, monostatic sensing, bistatic sensing, and/or multistatic sensing may be classified based on an angle between the sensing transmitter, the sensing target, and the sensing receiver. For example, when the angle between the sensing transmitter, the sensing target, and the sensing receiver is less than or equal to a threshold, it may be defined as monostatic sensing or semi-monostatic sensing. For example, when the angle between the sensing transmitter, the sensing target, and the sensing receiver is greater than or equal to a threshold, it may be defined as bistatic sensing or multistatic sensing. For example, a UE may transmit a sensing signal on a wireless interface that can be used for sensing purposes. For example, a UE may transmit a sensing signal on a 3GPP wireless interface that can be used for sensing purposes.

For example, a common framework of an ISAC channel model may be composed of components of a target channel and components of a background channel. For example, this may be obtained based on Equation 1.

[Equation 1]

$$H_{ISAC} = H_{target} + H_{background}$$

Here, for example, a target channel $H_{target}$ may include all multipath components affected by a sensing target. For example, a background channel $H_{background}$ may include other multipath components not belonging to the target channel.

For example, a radar cross-section (RCS) may be a measure of how well a radar sensor can detect a target. Accordingly, this may often be referred to as electromagnetic characteristics of a target. For example, a larger RCS may indicate that the target can be detected more easily. For example, in radar sensor measurements, power may be transmitted toward a target, and the target may reflect part of the power to a receiver. For example, received power may be based, among other factors, on the RCS of the target. For example, received power may be proportional to RCS. For example, an RCS of a target may be based on at least one of a frequency of a radar signal, a target material, a target shape, a target size, a direction of the incident and reflected waves relative to the target, a target movement, and/or a target illumination.

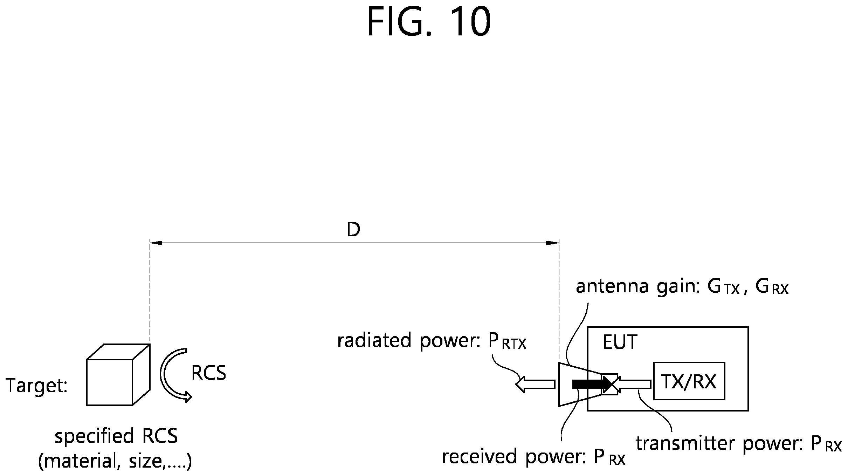

FIG. 10 shows a relationship among radar cross-section (RCS), distance (D), and power, based on an embodiment of the present disclosure. The embodiment of FIG. 10 may be combined with various embodiments of the present disclosure, and among the above embodiments, some description, functions, procedures, proposals, methods, and/or operations may be omitted.

Referring to FIG. 10, the RCS of a radar target may be a virtual area required to intercept a power density transmitted from the target. For example, a related radar equation may be defined as Equation 2.

[Equation 2]

$$P_{RX} = \frac{P_{TX} \times G_{TX}}{4 \times \pi \times D^2} \times RCS \times \frac{1}{4 \times \pi \times D^2} \times A_{eff}$$

Here, for example, $P_{TX}$ may be a transmitter power [W], $G_{TX}$ may be a gain of a transmitting antenna [dimensionless], D may be a distance [m] between an equipment under test (EUT) and a target, RCS may be a radar cross-section [m²], $P_{RX}$ may be a power [W] received by the EUT from the target, and $A_{eff}$ may be an effective aperture [m²] of a receiving antenna. For example, $A_{eff}$ may be obtained based on Equation 3.

[Equation 3]

$$A_{eff} = \frac{G_{RX} \times \lambda^2}{4 \times \pi}$$

Here, for example, $G_{RX}$ may be a gain of a receiving antenna [dimensionless], $\lambda$ may be a wavelength [m] of a radio signal, $\lambda$ = c/f, c may be a speed of light 299792458 [m/s], and f may be a frequency [Hz].

For example, when a transmitter and a receiver are collocated and the same antenna is used for transmission and reception ($G_{TX}$ = $G_{RX}$ = G), the related radar equation may be defined as Equation 4.

[Equation 4]

$$P_{RX} = \frac{P_{TX} \times G^2 \times \lambda^2}{(4 \times \pi)^3 \times D^4} \times RCS$$

Here, for example, $P_{TX}$ may be a transmitter power [W], G may be a gain of a transmitting antenna [dimensionless], D may be a distance [m] between an equipment under test (EUT) and a target, RCS may be a radar cross-section [m²], and $P_{RX}$ may be a power [W] received by the EUT from the target.

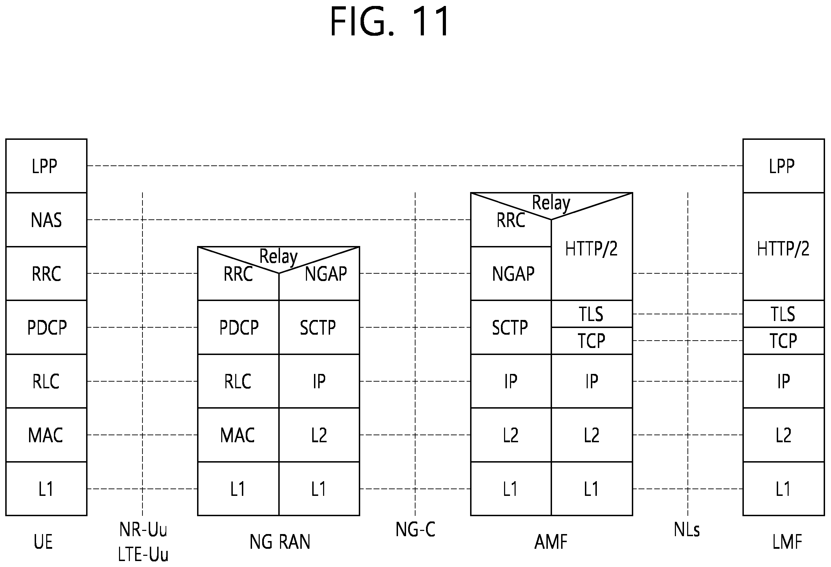

FIG. 11 shows an example of protocol layers used to support LTE positioning protocol (LPP) message transfer between a location management function (LMF) and a UE, based on an embodiment of the present disclosure. The embodiment of FIG. 11 may be combined with various embodiments of the present disclosure, and among the above embodiments, some description, functions, procedures, proposals, methods, and/or operations may be omitted.

An LPP PDU may be transmitted through a non-access stratum (NAS) PDU between an access and mobility management function (AMF) and a UE. Referring to FIG. 11, the LPP may be terminated between a target device (e.g., a UE in a control plane or a secure user plane location (SUPL) enabled terminal (SET) in a user plane) and a location server (e.g., an LMF in a control plane or a secure user plane location platform (SLP) in a user plane). An LPP message may be delivered in the form of a transparent PDU through intermediate network interfaces by using an appropriate protocol such as an NG application protocol (NGAP) over an NG-control plane (NG-C) interface, a NAS/RRC over an LTE-Uu and NR-Uu interface, and the like. The LPP protocol enables positioning for NR and LTE using various positioning methods.

For example, a target device and a location server may exchange performance information, assistance data for positioning, and/or location information through the LPP protocol. For example, through an LPP message, error information exchange and/or interruption indication of an LPP procedure may be performed.

In the present disclosure, the following terms may be used.

- ISAC: integrated sensing and communication
- OFDM: orthogonal frequency division multiplexing
- V2X: vehicle-to-everything
- FFT: fast Fourier transform
- CS: compressed sensing
- MUSIC: multiple signal classification
- EVD: eigenvalue decomposition
- DoA: direction of angle
- URA: uniform rectangular array
- SCS: subcarrier spacing
- CP: cyclic prefix
- FDCS: frequency-domain comb-type smoothing
- TDCS: time-domain comb-type smoothing
- PVR: peak-to-valley ratio
- RRC: radio resource control
- PDSCH: physical downlink shared channel
- PUSCH: physical uplink shared channel
- PDCCH: physical downlink control channel
- PUCCH: physical uplink control channel
- DMRS: demodulation reference signal

- CSI-RS: channel state information-reference signal
- SRS: sounding reference signal
- PRS: positioning reference signal
- IAB: integrated access and backhaul
- DAPS: dual active protocol stack
- DL: downlink
- UL: uplink
- BS: base station
- UE: user equipment
- PHR: power headroom report
- LMF: location management function
- UE-triggered SL positioning: sidelink positioning procedure triggered by a UE
- BS/LMF-triggered SL positioning: sidelink positioning procedure triggered by a base station (BS) or a location management function (LMF)
- UE-controlled SL positioning: sidelink positioning group generated by a UE
- BS-controlled SL positioning: sidelink positioning group generated by a BS
- UE-based SL positioning: UE position calculated by a UE in sidelink positioning
- UE-assisted SL positioning: UE position calculated by a BS or an LMF in sidelink positioning
- SL positioning group: group of UEs participating in sidelink positioning
- T-UE: target UE whose position is calculated
- S-UE: server UE that assists a target UE (T-UE) in positioning
- Anchor UE: UE that assists a target UE (T-UE) in positioning
- MG: measurement gap where only sidelink positioning reference signal (SL PRS) transmission is allowed
- MW: measurement window where both sidelink data and SL PRS can be transmitted in a multiplexed way
- SL PRS: sidelink positioning reference signal
- CCH: control channel
- IUC: inter-UE coordination message
- UE-based: method in which a UE calculates its own position
- TP: transmission point, a set of transmission antennas colocated at the same geographical position for one cell, part of one cell, or one DL PRS-only transmission point
- RP: reception point, a set of reception antennas colocated at the same geographical position for one cell, part of one cell, or one UL SRS-only reception point. A reception point may include BS antennas, remote radio heads, remote antennas of a BS, antennas of an UL SRS-only RP, etc. One cell may include one or more reception points. In the case of homogeneous deployment, each reception point may correspond to one cell.
- PRS-only TP: transmission point that transmits only positioning reference signal (PRS) for terrestrial beacon system (TBS) positioning and is not associated with a cell
- TRP: transmission-reception point, a set of antennas colocated at the same geographical position supporting transmission point (TP) and/or reception point (RP) functions
- SRS-only RP: reception point that receives only sounding reference signal (SRS) for UL-only positioning and is not associated with a cell

In the present disclosure, a transmission-reception point (TRP) and a base station (BS) may be used interchangeably as the same entity.

For example, a sidelink positioning reference signal (SL PRS) transmission resource may be composed of an SL PRS resource set consisting of the following information.

- SL PRS resource set ID
- SL PRS resource ID list: list of SL PRS resources within an SL PRS resource set
- SL PRS resource type: may be configured as periodic, aperiodic, semi-persistent, or on-demand
- alpha: parameter for SL PRS power control
- P0: parameter for SL PRS power control
- path loss reference: reference for SL PRS power control, may be configured as SL SSB, DL PRS, UL SRS, UL SRS for positioning, PSCCH DMRS, PSSCH DMRS, PSFCH, SL CSI-RS, etc.

For example, a sidelink positioning reference signal (SL PRS) transmission resource may be composed of an SL PRS resource consisting of the following information.

- SL PRS resource ID

- SL PRS comb size: spacing between resource elements (REs) where SL PRS is transmitted within a symbol
- SL PRS comb offset: index of the first RE where SL PRS is first transmitted within the first SL PRS symbol
- SL PRS comb cyclic shift: cyclic shift used for generating a sequence that constitutes SL PRS
- SL PRS start position: index of the first symbol in a slot where SL PRS is transmitted
- Number of SL PRS symbols: number of symbols constituting SL PRS within a slot
- Frequency domain shift: lowest frequency position (index) in a frequency domain where SL PRS is transmitted
- SL PRS bandwidth (BW): frequency bandwidth used for SL PRS transmission
- SL PRS resource type: may be configured as periodic, aperiodic, semi-persistent, or on-demand
- SL PRS periodicity: periodicity in a time domain among SL PRS resources, physical or logical slots in a resource pool where SL PRS is transmitted
- SL PRS offset: offset in a time domain from a reference timing to a start point of a first SL PRS resource, expressed in physical or logical slots in a resource pool where SL PRS is transmitted. The reference timing may be SFN = 0, DFN = 0, or a time point when reception or decoding of RRC, MAC-CE, DCI, or SCI associated with the SL PRS resource is successful.
- SL PRS sequence ID
- SL PRS spatial relation: may be configured as SL SSB, DL PRS, UL SRS, UL SRS for positioning, PSCCH DMRS, PSSCH DMRS, PSFCH, SL CSI-RS, etc.
- SL PRS control channel (CCH): control channel for SL PRS, used to signal SL PRS resource configuration information and resource location

Conventionally, until Release 17, NR positioning supported only Uu positioning based on a network in which positioning was performed under a connection between a target UE and a network (gNB/LMF). Meanwhile, from Release 18, sidelink positioning may be supported by using sidelink communication. In sidelink positioning, a target UE may newly perform positioning operations through direct connections with anchor UEs around the target UE, instead of through a BS, and may exchange positioning reference signals. In physical layer operations, positioning may be performed through transmission and measurement of sidelink positioning reference signal (SL PRS) between the target UE and anchor UEs.

Uu positioning may use the LTE positioning protocol (LPP). An LPP session may be a point-to-point communication protocol between a target UE and a location management function (LMF). Through the LPP protocol, a target UE may be provided with necessary information for positioning via the LMF. The LMF may configure both the target UE and a BS (gNB) through the LPP protocol and the NRPPa protocol, may exchange positioning-related messages, and may perform positioning operations. Meanwhile, in Release 18 sidelink positioning, positioning operations may be performed by exchanging sidelink positioning protocol (SLPP) messages between a target UE, a server UE (or an LMF), and anchor UEs. In sidelink positioning, an SLPP may be used to configure sidelink positioning configurations and exchange messages between UEs.

A positioning method (e.g., sidelink positioning) has a limitation that a target must carry a UE, and signaling messages must be exchanged between a transmitter and the target UE for positioning measurement. As a result, signaling overhead for signal processing between the transmitter and the target UE increases, and fundamentally, positioning cannot be performed when a target does not carry a UE.

In contrast, an integrated sensing and communication (ISAC) method may detect the presence and movement of a target accurately regardless of whether the target carries a UE, and further may stably obtain detailed sensing information such as distance, velocity, and angle of the target. The ISAC method does not require a separate response signal or message from the target. Instead, it estimates characteristics of the target only by analyzing information of signals transmitted by a transmitter and reflected from the target. Accordingly, ISAC significantly reduces signaling overhead compared with positioning methods, enabling more efficient and flexible simultaneous support of sensing and communication operations.

In the following description, various names are exemplary, and (regardless of the names) they may be regarded as performing the same or similar functions based on the descriptions of each step.

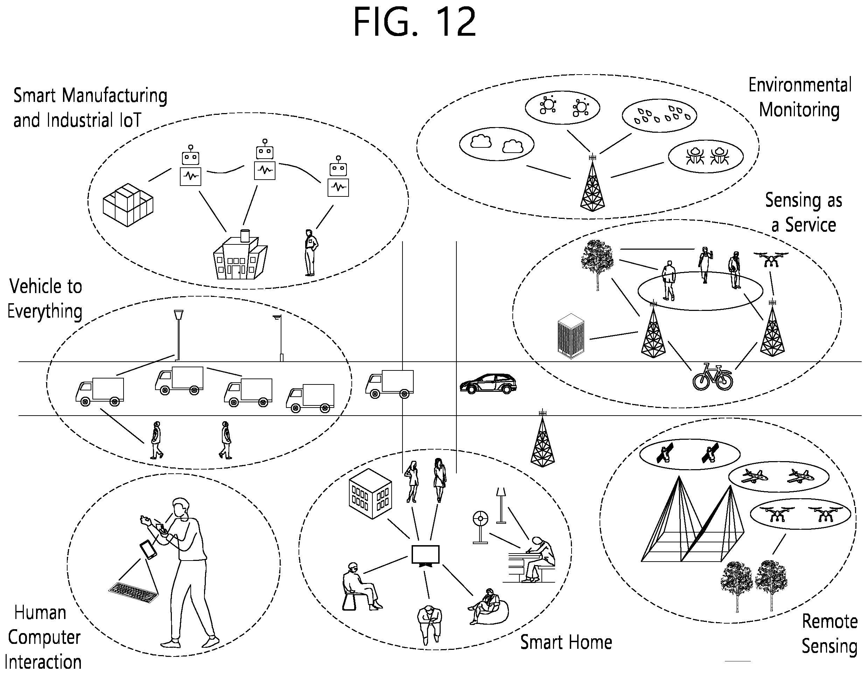

FIG. 12 shows examples of ISAC services, based on an embodiment of the present disclosure. The embodiment of FIG. 12 may be combined with various embodiments of the present disclosure, and among the above embodiments, some description, functions, procedures, proposals, methods, and/or operations may be omitted.

Referring to FIG. 12, examples of various application fields in which ISAC may be applied are illustrated. Specifically, ISAC may support predictive maintenance and employee localization and authorization in smart manufacturing and industrial IoT fields, and provide weather prediction, pollution monitoring, rain monitoring, and insect monitoring in environmental monitoring fields.

In addition, in sensing-as-a-service fields, ISAC may be utilized for drone monitoring and management, mobile crowd sensing, channel knowledge map construction, and cooperative localization and imaging.

Furthermore, in remote sensing fields, ISAC may support satellite imaging and broadcasting, drone swarm SAR imaging, and in smart home fields, ISAC may be utilized for human proximity detection, spatial-aware control, sensing-aided wireless charging, fall detection, and vital signal monitoring.

In addition, in human-computer interaction (HCI) fields, ISAC may enable gesture recognition, keystroke recognition, and arm/head activity recognition. In vehicle-to-everything (V2X) fields, ISAC may provide services such as high-precision location, vehicles platooning, extended sensor, simultaneous localization and mapping (SLAM), and secure hands-free access.

Recently, in the 6th generation (6G) mobile communication system, ISAC technology integrating target sensing functions and user communication functions has been attracting attention as a key standardization target. Based on advantages such as efficient frequency usage, reuse of existing communication infrastructure, and cost savings from integrating sensing and communication sensors, ISAC is emerging as an essential technology in various industries (e.g., autonomous driving, smart factories, unmanned aerial vehicles, healthcare) as illustrated in FIG. 12.

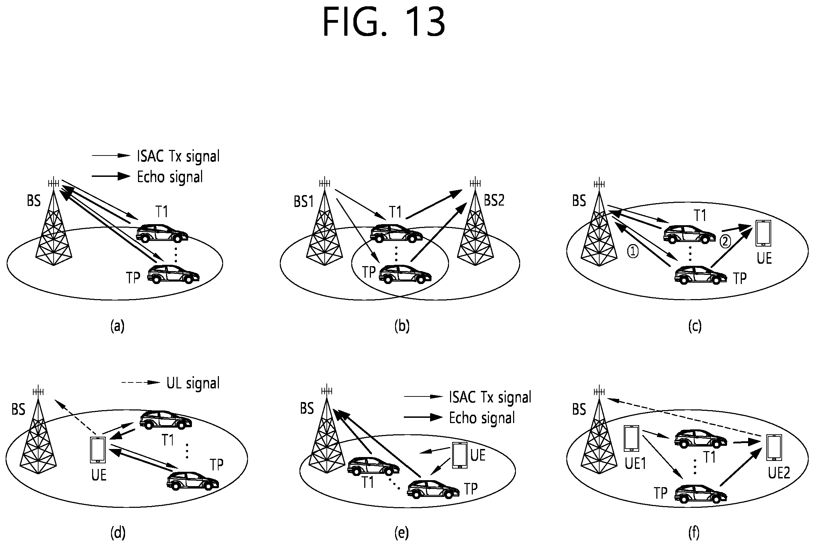

FIG. 13 shows various integrated sensing and communication (ISAC) systems, based on an embodiment of the present disclosure. Specifically, (a) of FIG. 13 shows an example of a network-based monostatic ISAC system, (b) of FIG. 13 shows an example of a network-based bistatic ISAC system, and (c) of FIG. 13 shows an example of a network-UE-based bistatic ISAC system (①) and a network-coordinated UE bistatic ISAC system (①+②). In addition, (d) of FIG. 13 shows an example of a UE-based monostatic ISAC system, (e) of FIG. 13 shows an example of a UE-network bistatic ISAC system, and (f) of FIG. 13 shows an example of a UE-based bistatic ISAC system. The embodiments of FIG. 13 may be combined with various embodiments of the present disclosure, and among the above embodiments, some description, functions, procedures, proposals, methods, and/or operations may be omitted.

Referring to FIG. 13, various ISAC systems may be considered to include various ISAC service embodiments. In an embodiment of the present disclosure, a base station (BS) may be expressed as a BS, and a user equipment (UE) may be expressed as a UE. A transmitter may transmit a signal for sensing, and a receiver may perform sensing based on a signal reflected from an object. (a) of FIG. 13 may show a network-based monostatic ISAC system. In this system, a BS may transmit ISAC signals to multiple targets and receive reflected signals to estimate distances and velocities of the targets (the targets may be UEs). (b) of FIG. 13 may show a network-based bistatic ISAC system. In this system, two BSs may cooperate to estimate distances and velocities of the same multiple targets. BS 1 may be a transmitter, and BS 2 may be a receiver. BS 2 may receive ISAC signals transmitted from BS 1 and reflected by the targets, and then estimate distances and velocities of the targets. Unlike a monostatic ISAC system, a bistatic ISAC system may not have information related to a transmission signal. Therefore, a bistatic ISAC system may obtain a radar information matrix of the targets through pilot signals (already known between a transmitter and a receiver). (c) of FIG. 13 may show a network-UE-based bistatic ISAC system. In this system, a BS may transmit an ISAC signal. By beamforming, most of the reflected signals may be directed to a UE, or partially back to the BS. In the former case, the UE receives most of the signals and directly estimates distance and velocity of targets, enabling fast obtaining of target information but with higher computational complexity at the UE. In the latter case, the BS first estimates distance and velocity of targets as in a monostatic system, and based on the estimation results, informs the UE of an appropriate target estimation method. Thus, the UE can immediately perform target estimation with low complexity.

(d) of FIG. 13 may show a UE-based monostatic ISAC system. In this system, a UE may directly estimate a target's distance and velocity. (e) of FIG. 13 may show a UE-network bistatic ISAC system. In this system, a BS may receive ISAC signals transmitted by a UE and reflected by targets, and may estimate distances and velocities of multiple targets. (f) of FIG. 13 may show a UE-based bistatic ISAC system. In this system, distances and velocities of targets may be estimated through bistatic operation between different UEs.

A wireless communication system is a multiple access system that supports communication with multiple UEs by sharing available system resources (e.g., bandwidth, transmission power, etc.). Examples of multiple access systems may include code division multiple access (CDMA), frequency division multiple access (FDMA), time division multiple access (TDMA), orthogonal frequency division multiple access (OFDMA), single carrier-FDMA (SC-FDMA), and multi carrier-FDMA (MC-FDMA).

Sidelink (SL) refers to a communication scheme in which UEs establish a direct link to exchange voice or data directly with each other without passing through a base station (BS). SL has been considered as one scheme for alleviating the burden of BSs due to rapidly increasing data traffic.

Vehicle-to-everything (V2X) refers to a communication technology that exchanges information with other vehicles, pedestrians, and objects equipped with infrastructure through wired/wireless communication. V2X may be classified into four types: vehicle-to-vehicle (V2V), vehicle-to-infrastructure (V2I), vehicle-to-network (V2N), and vehicle-to-pedestrian (V2P). V2X communication may be provided through a PC5 interface and/or a Uu interface.

Meanwhile, as more communication devices demand larger communication capacity, a need for enhanced mobile broadband communication has emerged compared to conventional radio access technology (RAT). Accordingly, communication systems considering services or UEs sensitive to reliability and latency have been discussed. Such communication systems may be referred to as new radio access technology (NR) or new radio (NR). V2X communication may also be supported in NR.

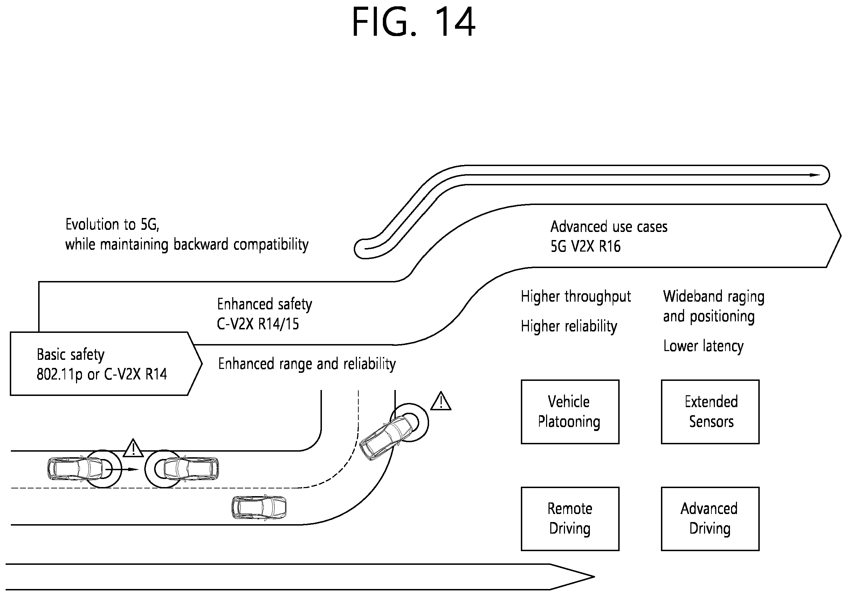

FIG. 14 is a diagram for explaining a comparison between V2X communication based on a RAT prior to NR and V2X communication based on NR, based on an embodiment of the present disclosure. The embodiment of FIG. 14 may be combined with various embodiments of the present disclosure, and among the above embodiments, some description, functions, procedures, proposals, methods, and/or operations may be omitted.

In relation to V2X communication, in RAT prior to NR, safety services have mainly been discussed based on V2X messages such as a basic safety message (BSM), a cooperative awareness message (CAM), and a decentralized environmental notification message (DENM). A V2X message may include location information, dynamic information, and attribute information. For example, a UE may transmit to other UEs a periodic message type such as CAM and/or an event-triggered message type such as DENM.

For example, a CAM may include basic vehicle information such as dynamic state information of a vehicle (e.g., direction, speed), static data of a vehicle (e.g., dimensions), external lighting state, and path history. For example, a UE may broadcast a CAM, and the latency of a CAM may be less than 100 ms. For example, when a sudden situation such as a vehicle failure or accident occurs, a UE may generate a DENM and transmit it to other UEs. For example, all vehicles within the transmission range of a UE may receive a CAM and/or a DENM. In this case, a DENM may have higher priority than a CAM.

Thereafter, various V2X scenarios have been presented in NR in relation to V2X communication. For example, various V2X scenarios may include vehicle platooning, advanced driving, extended sensors, and remote driving.

For example, based on vehicle platooning, vehicles may dynamically form a group and move together. To perform platoon operations based on vehicle platooning, vehicles belonging to the group may receive periodic data from a leading vehicle. For example, vehicles belonging to the group may use the periodic data to shorten or lengthen inter-vehicle distances.

For example, based on advanced driving, a vehicle may be semi-automated or fully automated. For example, each vehicle may adjust trajectories or maneuvers based on data obtained from local sensors of neighboring vehicles and/or neighboring logical entities. In addition, each vehicle may share driving intentions with neighboring vehicles.

For example, based on extended sensors, raw data, processed data, or live video data obtained through local sensors may be exchanged among vehicles, logical entities, UEs of pedestrians, and/or V2X application servers. Accordingly, a vehicle may recognize an environment beyond what can be detected by its own sensors.

For example, based on remote driving, a remote driver or a V2X application may operate or control a remote vehicle for a person who cannot drive or for a vehicle located in a dangerous environment. For example, when a route can be predicted (e.g., public transportation), cloud computing-based driving may be used for operating or controlling the remote vehicle. In addition, access to a cloud-based back-end service platform may be considered for remote driving.

Meanwhile, in V2X communication based on NR, schemes have been discussed for specifying service requirements for various V2X scenarios such as vehicle platooning, advanced driving, extended sensors, and remote driving.

The present disclosure relates to a scheme in which, in a situation where a specific target (e.g., a vehicle) must be sensed and sensing information must be transmitted within a specific time interval or at intervals greater than or equal to a specific time difference, the specific target is cooperatively recognized.

As an example requiring sensing, when a specific target vehicle is sensed through surrounding vehicles, sensors, or other equipment and the sensed information is aggregated, if the information has a large time gap, the correlation with a specific event may be weakened, making it meaningless. For example, when a vehicle involved in an accident reports surrounding information by sensing the accident site, if information unrelated to the accident time (e.g., information one hour after the accident) is transmitted, such information would be irrelevant to the accident event.

As another example, in the case of reporting an illegally parked vehicle, sensing of the target vehicle and transmission of the sensing information must be performed at intervals greater than or equal to a minimum time gap (e.g., 5 minutes) in order to prove that the vehicle has remained stopped for a specific period of time. However, if the same UE/sensor repeats sensing and reporting the event, unnecessary time may be wasted. On the other hand, if an unspecified large number of vehicles report whenever they detect the target, reports may be generated at too short intervals, resulting in duplicated information that is also meaningless.

Accordingly, a method is needed that allows surrounding vehicles, sensors, and equipment to transmit meaningful sensing results according to the type and nature of a specific event in order to avoid the situations described above.

When a specific target vehicle is sensed through surrounding vehicles, sensors, or other equipment and the sensed information is aggregated, if the information has a large time gap, the correlation with a specific event may be weakened or, if the information has too short a time gap, it may result in duplicated information. Therefore, a method is needed that allows surrounding vehicles, sensors, and equipment to transmit meaningful sensing results according to the type and nature of a specific event.

The present disclosure aims to solve the problems of 'time mismatch' and 'excessive duplication' that occur when multiple vehicles/sensors/UEs detect the same event at different times/locations. Conventionally, if sensing intervals are too large, correlation with the event is diluted; if intervals are too short, the same information is repeatedly transmitted, wasting radio resources. In particular, in services such as illegal parking/accident reporting that require 'evidence secured at least twice at intervals of 5 minutes or more,' it is difficult for a single vehicle to capture both, or if many arbitrary vehicles report indiscriminately, a server must process unnecessary duplicate data.

In addition, to determine the "validity" of sensing data, it is essential to cross-check (i) previous report count/timestamps, (ii) event validity duration/expiry time, and (iii) area/object/location data (e.g., HD map). However, a UE without real-time HD map access cannot know event/area information in advance, and even a UE with HD map access cannot guarantee timeliness if the update cycle is long. Thus, depending on system environment/event characteristics, a systematic method is required for deciding "whether to transmit or not" sensing data immediately on site. In situations where a single sensor cannot provide perfect sensing, it may be advantageous to sense diversely and rapidly using multiple sensors and transmit the data. Moreover, when a UE is requested to provide sensing data for a past event, it may need to retrieve stored sensing data and transmit it.

Of course, depending on the type of event, information sensed at similar times in similar environments may simply duplicate already obtained information and be meaningless. Therefore, it is not always advantageous to transmit sensed information immediately as it is.

Therefore, depending on the type and requirement conditions of an event, whether to transmit the sensed result may be determined. According to characteristics of a sensing window, sensing data may be selectively requested within a certain interval based on an event occurrence time, or selectively requested after a certain interval based on an event occurrence time.

1. Event sensing

For example, in the case of reporting an illegally parked vehicle, it may be necessary to prove that the target vehicle remains stopped in the same place for a specific period of time for parking purposes. To this end, at least two photos taken at intervals greater than or equal to a pre-determined minimum time gap (e.g., 5 minutes) may need to be submitted to a reporting system. However, if the same UE/sensor captures and reports the event twice with such an interval, unnecessary time may be wasted. Instead, it may be assumed that when a UE/sensor detects such an event, it captures at least one photo.

For example, the above photo may be captured in a manual manner in which a driver of the vehicle recognizes such an event and takes a photo (only one photo, not two) and uploads it to the system, as in the conventional method. Or, for example, if such an event situation can be automatically recognized, such manual operation may be unnecessary. For example, in a situation where an HD map and zone information (e.g., restricted area, lane information) are input and linked with a V2X system, if a vehicle/object is detected in a specific area or in an outermost lane marked with a no-parking line, the vehicle/object may be regarded as a potential violating vehicle.

For example, detecting such a violating vehicle in a manual or automatic manner may serve as triggering, leading to identifying the violating vehicle and transmitting the obtained information.

1.1. Manual sensing

[ Driver/device user visual determination of an event ]

For example, when equipment or functions capable of detecting an event are omitted, a driver or a device user may visually determine and manually report event information. For example, the driver or the device user may directly determine whether an event occurs and access a V2X communication-related device to execute a specific application and perform event reporting.

For example, when executing reporting in the application, the currently observed scene may be immediately captured or recorded and transmitted, or previous image/video data may be searched and transmitted. For example, in this process, information such as an event type, an event occurrence time, and an event target object may be input partially/entirely manually or partially/entirely automatically.

1.2. Automated sensing

[ Automatic determination of an event using sensors and V2X communication devices ]

For example, when equipment or functions capable of detecting an event are mounted on the device or a vehicle (e.g., a first vehicle), an event satisfying specific conditions (e.g., detecting that a specific object (e.g., an automobile) exists in a no-parking zone) may be automatically detected.

For example, HD map information including information related to a specific zone may be included in the V2X device of the first vehicle, and when the area entered by the first vehicle is designated as a no-parking zone (e.g., a first zone) on the HD map, sensors of the first vehicle may check for the presence of surrounding vehicles/objects and determine whether a specific vehicle/object (e.g., a second vehicle) exists in the first zone and whether specific event conditions are satisfied.

For example, when the HD map and sensors are activated and an associated GNSS device is also operating, the V2X communication-related device may be accessed in the event situation to execute a specific application and perform event reporting. For example, when executing reporting in the application, the currently observed scene may be immediately captured or recorded and transmitted, or previous image/video data may be searched and transmitted. For example, in this process, information such as an event type, an event occurrence time, and an event target object may be input partially/entirely manually or partially/entirely automatically.

Hereinafter and/or in the present disclosure, a system that can manage region/location information, object information, landmark information, etc. in association, including an HD map, may be referred to as an HD map.

For example, in the present disclosure, an HD map may include at least one of the following.

For example, in the present disclosure, an HD map may include a static geometry layer. For example, the static geometry layer (e.g., an HD map related to the static geometry layer) may include at least one of information related to lane centerlines, information related to lane boundaries (e.g., polylines), information related to curbs/shoulders, information related to precise curvatures, or information related to slopes.

For example, in the present disclosure, an HD map may include a digital traffic infrastructure layer. For example, the digital traffic infrastructure layer (e.g., an HD map related to the digital traffic infrastructure layer) may include at least one of information related to signal IDs, information related to signs, information related to variable message signs (VMS), or information related to smart crosswalks.

For example, in the present disclosure, an HD map may include a regulation/restriction area layer. For example, the regulation/restriction area layer (e.g., an HD map related to the regulation/restriction area layer) may include at least one of information related to bus/freight-only lanes, information related to no-parking zones, or information related to dangerous goods transport restriction areas.

For example, in the present disclosure, an HD map may include a dynamic event/crowd-sourcing layer. For example, the dynamic event/crowd-sourcing layer (e.g., an HD map related to the dynamic event/crowd-sourcing layer) may include at least one of information related to construction, information related to accidents, information related to variable speeds, or information related to road freezing.

For example, in the present disclosure, an HD map may include an environment sensor fusion layer. For example, the environment sensor fusion layer (e.g., an HD map related to the environment sensor fusion layer) may include at least one of information related to LiDAR intensity voxels, information related to mmWave radar reflectivity, or information related to camera scene graphs.

For example, in the present disclosure, an HD map may include a road-IoT metadata layer. For example, the road-IoT metadata layer (e.g., an HD map related to the road-IoT metadata layer) may include at least one of information related to RSUs, information related to C-V2X RSRP heat maps, or information related to 5G coverage.

For example, in the present disclosure, an HD map may include a multi-layer 3D indoor/underground linkage layer. For example, the multi-layer 3D indoor/underground linkage layer (e.g., an HD map related to the multi-layer 3D indoor/underground linkage layer) may include information related to multi-floor parking buildings/underpasses/tunnels.

For example, in the present disclosure, an HD map may include a digital twin/simulation layer. For example, the digital twin/simulation layer (e.g., an HD map related to the digital twin/simulation layer) may include information related to artificial terrain/traffic flow simulation models.

For example, in the present disclosure, event information may include at least one of the following.

For example, in the present disclosure, event information related to safety/risk may include at least one of information related to cargo/tire debris dropped on a road, information related to mis-merge due to temporary lane change in a construction section, or information related to black ice detection (e.g., fused road surface temperature/friction coefficient).

For example, in the present disclosure, event information related to regulation/violation may include at least one of information related to violation of bus-only lane time restrictions, information related to exceeding speed limits in front of schools (e.g., 30 km/h), or information related to long-term occupation of electric vehicle charging zones.

For example, in the present disclosure, event information related to traffic flow may include at least one of information related to prediction of tollgate bottleneck occurrence/release, information related to platoon train reorganization (e.g., based on inter-vehicle distance), or information related to ramp metering congestion level change.

For example, in the present disclosure, event information related to special/emergency may include at least one of information related to ambulance approach, information related to issuance of an emergency vehicle approach (EMA) signal, or information related to disclosure of detours in wildfire/heavy rain areas.

For example, in the present disclosure, event information related to infrastructure state may include at least one of information related to large-scale occurrence of streetlight failures, information related to detection of V2X RSU communication shadow areas, or information related to exceeding vibration/displacement thresholds of bridges.

For example, in the present disclosure, event information related to user experience/convenience may include at least one of information related to actual measurement of drive-through order waiting time, information related to estimation of parking lot available spaces/queues, or information related to entry into AR tourism content sections.

For example, in the present disclosure, information related to (sensing target) objects may include at least one of the following.

For example, in the present disclosure, information related to vehicles/mobility as (sensing target) objects may include at least one of information related to passenger cars/cargo trucks/buses/articulated large vehicles, information related to level-4 autonomous shuttles, information related to towing trailers, or information related to forklifts.

For example, in the present disclosure, information related to micro-mobility as (sensing target) objects may include at least one of information related to electric scooters, information related to autonomous delivery robots, information related to electric wheelchairs, or information related to drones (e.g., low-altitude L-AAM).

For example, in the present disclosure, information related to vulnerable road users (VRU) as (sensing target) objects may include at least one of information related to children/elderly/visually impaired pedestrians, information related to group processions, or information related to dog leashes.

For example, in the present disclosure, information related to infrastructure facilities as (sensing target) objects may include at least one of information related to smart traffic lights, information related to mobile RSUs, information related to variable lane indicators, or information related to road heating panels.

For example, in the present disclosure, information related to road assets/obstacles as (sensing target) objects may include at least one of information related to fixed/movable work zone barriers, information related to cones, information related to drums, information related to fallen objects, or information related to anti-slip mats.

For example, in the present disclosure, information related to environmental elements as (sensing target) objects may include at least one of information related to PM2.5 spots detected by air-quality sensors, information related to snowfall/freezing, information related to flood inundation boundaries, or information related to wild animals (e.g., deer/wild boars).

For example, in the present disclosure, information related to digital objects as (sensing target) objects may include at least one of information related to virtual AR signs, or information related to ghost nodes (e.g., geofence) that exist only as V2X messages.

2. Sensing information transmission

For example, when a (sensing target) object of the sensing information (e.g., a first target vehicle) is an object already sensed by another vehicle/sensor, it may be determined whether to report the information depending on the validity of the sensing information (or whether to process or discard it).

To this end, for example, object information/event information collected in a specific area may be received and compared with the sensed object (the first target vehicle). This may be in the form of a list receiving location information, identification information, and details, or in the form of HD map data dividing a moving area into necessary units. Or, for example, when HD map information is not received, is not updated, is invalid, or cannot be received, the sensed information may be transmitted to a higher network entity to check whether the (sensing target) object is valid and to determine whether the information can affect generation of an event of a specific type.

2.1. HD map-based

[ Determination of whether it is an initially sensed object: HD map-based ]

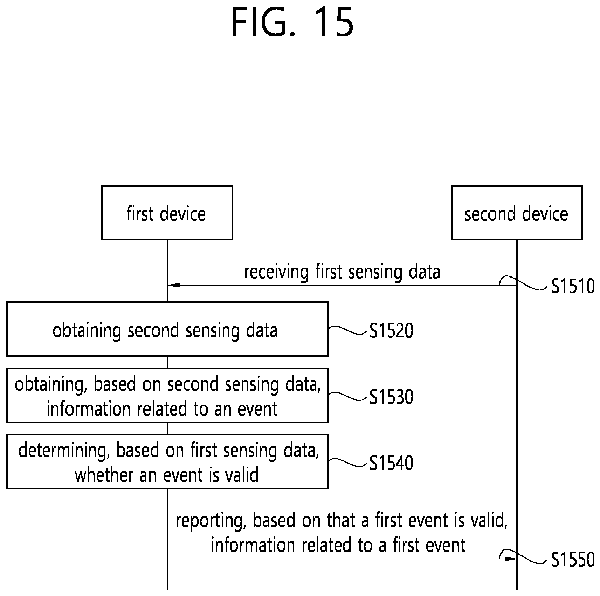

FIG. 15 shows a procedure in which a first device determines validity of an event, based on an embodiment of the present disclosure. The embodiment of FIG. 15 may be combined with various embodiments of the present disclosure, and among the above embodiments, some description, functions, procedures, proposals, methods, and/or operations may be omitted.

In step S1510, for example, the first device may receive first sensing data from a second device. In step S1520, for example, the first device may obtain second sensing data. In step S1530, for example, the first device may obtain information related to an event based on the second sensing data. In step S1540, for example, the first device may determine whether the event is valid based on the first sensing data. In step S1550, for example, the first device may report information related to the first event to the second device based on that the first event is valid. For example, based on that the first event is not valid, step S1550 may be omitted.

For example, when a vehicle enters a specific area or before entering (at a specific distance or a specific time in advance), sensing information or event generation information related to a specific event may be transmitted to the vehicle.

For example, when moving from a first zone to a second zone or at a specific distance before entering the second zone (e.g., 100 m), event information related to the second zone may be delivered from a higher network such as a V2X server in the form of event data of an HD map. For example, in the second zone, several special areas may exist, and in specific special areas such as no-parking zones, vehicles/objects may not be allowed to stop or park. For example, in such a situation, detecting vehicles/objects in the zone may be defined as occurrence of an event corresponding to a violation of regulations. For example, the event data may include special area information and sensed object information (e.g., special area information and sensed object information may be transmitted together with the event data). For example, the second zone may include information such as that no object exists in a first special area but that an object exists at a specific point in a second special area. For example, this is very dynamic information even in an HD map and may need to be frequently updated depending on the reporting/generation cycle of events.

For example, a first vehicle may report an event based on whether the (sensed) event is valid.

For example, when event data of an HD map received by the first vehicle does not include event information related to a first (sensing target) vehicle, the event information may be reported to request that the HD map event be updated (newly registered).

For example, when event data of an HD map received by the first vehicle already includes event information related to a first (sensing target) vehicle, and when update conditions of the event information are checked and satisfied, the first vehicle may report the event information to request that the HD map event be updated (event information update). For example, the update condition may mean reporting when new information related to an event is meaningful by comparing a timestamp when the event occurred, a valid duration of the event, and an expiry time of the event. More specifically, for example, in the case of sensing a vehicle parked in a no-parking zone, when initial reporting information exists and current sensing information does not satisfy update conditions of the event (e.g., when the sensing time is less than 5 minutes apart from a timestamp of initial reporting), the sensing information may be discarded. Or, for example, when current sensing information satisfies update conditions of the event (e.g., when the sensing time is greater than or equal to 5 minutes apart from a timestamp of initial reporting), the first vehicle may transmit the sensing information to a higher network entity. For example, a higher network entity such as a V2X server may aggregate initially reported information and newly reported information, and update the event as an event that satisfies reporting conditions and is completed (or expired). For example, in HD map event data, for the specific object (e.g., a first target object) sensed in the corresponding special area of the zone, it may be indicated as an already expired event so that following vehicles/sensors are restricted from further reporting the event.

2.2. Non-HD map-based

[ Determination of whether it is an initially sensed object: non-HD map-based ]

When HD map data received by the first vehicle does not include event-related information of a specific type of event, or when the first vehicle is configured not to transmit/receive event-related information (or information of the specific type of event), or when the first vehicle does not receive HD map information including area information and event information, or cannot use an HD map, the first vehicle may transmit the sensed event information to a higher network entity such as a V2X server (e.g., reporting).

For example, when the higher network entity cannot check event information related to a first target vehicle, the HD map event may be updated (newly registered) based on the reported sensing information.

For example, when the higher network entity already has event information related to a first target vehicle, and when update conditions of the event information are checked and satisfied, the HD map event may be updated (event information update) based on the reported sensing information. More specifically, for example, in the case of sensing a vehicle parked in a no-parking zone, when initial reporting information exists and current sensing information does not satisfy update conditions of the event (e.g., when the sensing time is less than 5 minutes apart from a timestamp of initial reporting), the sensing information may be discarded. Or, for example, when current sensing information satisfies update conditions of the event (e.g., when the sensing time is greater than or equal to 5 minutes apart from a timestamp of initial reporting), the initially reported information and newly reported information may be aggregated, and the event may be updated as an event that satisfies reporting conditions and is completed (or expired). For example, in HD map event data, for the specific object (e.g., a first target object) sensed in the corresponding special area of the zone, it may be indicated as an already expired event so that following vehicles/sensors (that can receive HD map information) are restricted from further reporting the event.

For example, when a vehicle manually recognizes a specific event or automatically recognizes it based on an HD map, whether to transmit the sensing information may be checked according to characteristics of the event. For example, it may be identified how many times the event has been reported so far, when it was first sensed, and how much difference there is between a previous reporting time and a current sensing time. For example, when a specific condition is satisfied (e.g., when an event requires two transmissions at intervals of 5 minutes or more, and there has been one transmission so far, and the previous transmission was 5 minutes and 10 seconds ago), the current sensing information may be determined to be valid and transmitted to a higher network entity. For example, when detailed information related to an event cannot be identified through an HD map (when a sensor or device is simply designed to detect a specific event), all detected events may be transmitted to the higher network entity for filtering and processing at the network side.

For example, when a large amount of information related to an event is required, restrictions on event information transmission may not be imposed or may be relaxed so that more information can be obtained.

3. Sensing information processing

For example, in a network entity that has received sensing information, the validity of the sensing information may be checked by comparing it with existing information, and, if necessary, the information may be updated and managed, or, if necessary, the updated information may be transmitted to entities of associated areas. For example, the updated HD map may include data such as event information related to a vehicle that has already been reported, identification information, and so on.

For example, when following vehicles recognize the target vehicle and the violation, either manually or automatically, after initial sensing or reporting, reporting or notifying the violation of the target vehicle may be performed according to the following options.

1) For example, acceptance of all reporting: a higher network entity may accept all repeated reporting to determine the presence of the target vehicle as continuously as possible. However, when an unspecified large number of vehicles report/notify the identified target vehicle whenever they detect it, if the minimum interval is not observed, information reported at excessively short intervals may simply be duplicate information, only indicating that the target vehicle still exists, and may not have significant meaning otherwise.

For example, reporting/notifying of an unidentified (e.g., unknown) target vehicle by an unspecified large number of vehicles simultaneously or in the order of discovery may help in identifying the vehicle, and even if the target is not identified, sensed video/images or identification-related information (e.g., vehicle license plate area) may be transmitted in the form of a V2X message or in the form of a payload of another application. In this case, for example, target vehicle-related information may be automatically or manually recognized and input.

In this mode of accepting all reporting, or during a period when this mode operates, for example, a parameter for intervals of receiving reporting may not be configured, may be configured to 0, or may be configured to a minimum value (e.g., 0.1 sec).

2) For example, acceptance of reporting at specific intervals that meet event conditions: when there already exists reporting that occurred within a time window corresponding to the configured minimum interval (e.g., 5 minutes), additional reporting is not accepted, and when no reporting exists within the time window, new reporting may be accepted.

3) For example, acceptance of reporting at specific intervals other than event conditions: or, to use reported results for purposes other than event detection or as auxiliary purposes of event detection, a sub-window smaller than the minimum interval time window (e.g., 5 minutes) may be configured (e.g., 5 seconds), and when no reporting has occurred within the sub-window, new reporting may be accepted. For example, when it is detected that an object has violated regulations, but identification information of the object is not accurately identified/reported, further reporting may be continuously accepted to aggregate information for more complete identification.

For example, in the present disclosure, sensing information (or sensing data) may include at least one of object information or event information. For example, in the present disclosure, sensing information (or sensing data) may be replaced with and interpreted as at least one of object information or event information.

The proposed methods in the present disclosure may be applied to both 3GPP sensing data and non-3GPP sensing data.

For example, in the present disclosure, sensing data may be data derived by a sensing radio measurement entity based on radio signals impacted (e.g., reflected, refracted, diffracted) by an object or environment of interest for sensing purposes. For example, this data may be raw measurements and optionally processed within the sensing radio measurement entity.

For example, in the present disclosure, 3GPP sensing data may be data derived from 3GPP radio signals impacted (e.g., reflected, refracted, diffracted) by an object or environment of interest for sensing purposes, and optionally processed within the 5G system.

For example, in the present disclosure, non-3GPP sensing data may be data provided by non-3GPP sensors (e.g., video, LiDAR, sonar) about an object or environment of interest for sensing purposes.

For example, in the present disclosure, 5G/6G Wireless sensing may be 5GS/6GS feature providing capabilities to get information related to characteristics of the environment and/or objects within the environment (e.g., shape, size, orientation, speed, location, distances or relative motion between objects, etc) using NR radio frequency signals, which, in some cases, can be extended by information created via previously specified functionalities in EPC and/or E-UTRAN.

For example, in the present disclosure, sensing assistance information may be information that is provided to the 5G system from a trusted third-party and can be used to support the derivation of a sensing result. For example, this information does not contain 3GPP sensing data. For example, examples of sensing assistance information are map information, area information, a UE ID attached to or in the proximity of the sensing target, UE position information, UE velocity information etc.

For example, in the present disclosure, sensing contextual information may be information that is exposed with the sensing results by 5G system to a trusted third-party which provides context to the conditions under which the sensing results were derived. This information may not contain 3GPP sensing data. For example, examples of sensing contextual information includes map information, area information, time of capture, UE location and ID. This contextual information can be required in scenarios where the sensing result is to be combined with data from other sources outside the 5GS.

For example, in the present disclosure, sensing group may be a set of sensing transmitters and sensing receivers whose location is known and whose sensing data can be collected synchronously.

For example, in the present disclosure, sensing receiver may be an entity that receives the sensing signal which the sensing service will use in its operation. A sensing receiver may be part of a RAN node or a UE. A Sensing receiver can be located in the same or different entity as the Sensing transmitter.

For example, in the present disclosure, sensing result may be processed 3GPP sensing data requested by a service consumer.

For example, in the present disclosure, sensing signals may be transmissions on the 3GPP radio interface that can be used for sensing purposes. For example, this definition may refer to NR radio frequency signals which, in some cases, can be extended by information created via previously specified functionalities in EPC and/or E-UTRAN.

For example, in the present disclosure, sensing transmitter may be a sensing transmitter is the entity that sends out the sensing signal which the sensing service will use in its operation. A Sensing transmitter is part of a RAN node or a UE. A Sensing transmitter can be located in the same or different entity as the Sensing receiver.

For example, target sensing service area may be a cartesian location area that needs to be sensed by deriving characteristics of the environment and/or objects within the environment with certain sensing service quality from the impacted (e.g., reflected, refracted, diffracted) 3GPP radio signals. This includes both indoor and outdoor environments.

For example, the present disclosure may be applied to BS and/or UE monostatic. For example, the present disclosure may also be applied to BS-BS, BS-UE, UE-BS, and/or UE-UE bistatic.

For example, in the present disclosure, a "specific threshold" may mean a threshold that is pre-defined or (pre-) configured by an upper layer (including an application layer) of a network, BS, or UE. For example, in the present disclosure, a "specific configured value" may mean a value that is pre-defined or (pre-)configured by an upper layer (including an application layer) of a network, BS, or UE. For example, in the present disclosure, "configured by the network/BS" may mean that a BS (pre-)configures a UE through upper layer RRC signaling, configures/signals the UE through MAC CE, or signals the UE through DCI.

For example, in the present disclosure, a message may be replaced with and interpreted as at least one of a control message, a data message, a signal, a data signal, and/or a control signal. For example, in the present disclosure, various names are exemplary, and (regardless of the names) they may be replaced with/considered as other names performing the same or similar functions based on the content described in each step.

For example, in the present disclosure, applicability of (some of) the proposed schemes/rules and/or related parameters (e.g., thresholds) may be specifically configured (or differently or independently configured) for a resource pool. For example, applicability of (some of) the proposed schemes/rules and/or related parameters (e.g., thresholds) may be specifically configured (or differently or independently configured) for a congestion level. For example, applicability of (some of) the proposed schemes/rules and/or related parameters (e.g., thresholds) may be specifically configured (or differently or independently configured) for service priority. For example, applicability of (some of) the proposed schemes/rules and/or related parameters (e.g., thresholds) may be specifically configured (or differently or independently configured) for service type. For example, applicability of (some of) the proposed schemes/rules and/or related parameters (e.g., thresholds) may be specifically configured (or differently or independently configured) for QoS requirements (e.g., latency, reliability). For example, applicability of (some of) the proposed schemes/rules and/or related parameters (e.g., thresholds) may be specifically configured (or differently or independently configured) for a PQI (5QI (5G QoS identifier) for PC5. For example, applicability of (some of) the proposed schemes/rules and/or related parameters (e.g., thresholds) may be specifically configured (or differently or independently configured) for traffic type (e.g., periodic generation or aperiodic generation). For example, applicability of (some of) the proposed schemes/rules and/or related parameters (e.g., thresholds) may be specifically configured (or differently or independently configured) for SL transmission resource allocation mode (e.g., mode 1 or mode 2). For example, applicability of (some of) the proposed schemes/rules and/or related parameters (e.g., thresholds) may be specifically configured (or differently or independently configured) for a Tx profile (e.g., a Tx profile indicating that sidelink DRX operation is supported for a service, or a Tx profile indicating that sidelink DRX operation is not required for a service).

For example, in the present disclosure, applicability of the proposed rules and/or related parameter configuration values may be specifically configured (or differently or independently configured) depending on whether PUCCH configuration is supported (e.g., when a PUCCH resource is configured or when a PUCCH resource is not configured).

For example, applicability of the proposed rules and/or related parameter configuration values may be specifically configured (or differently or independently configured) for a resource pool (e.g., a resource pool in which a PSFCH is configured or a resource pool in which a PSFCH is not configured). For example, applicability of the proposed rules and/or related parameter configuration values may be specifically configured (or differently or independently configured) for service/packet type. For example, applicability of the proposed rules and/or related parameter configuration values may be specifically configured (or differently or independently configured) for service/packet priority. For example, applicability of the proposed rules and/or related parameter configuration values may be specifically configured (or differently or independently configured) for a QoS profile or QoS requirements (e.g., URLLC/EMBB traffic, reliability, latency). For example, applicability of the proposed rules and/or related parameter configuration values may be specifically configured (or differently or independently configured) for a PQI. For example, applicability of the proposed rules and/or related parameter configuration values may be specifically configured (or differently or independently configured) for a PFI. For example, applicability of the proposed rules and/or related parameter configuration values may be specifically configured (or differently or independently configured) for cast type (e.g., unicast, groupcast, broadcast). For example, applicability of the proposed rules and/or related parameter configuration values may be specifically configured (or differently or independently configured) for (resource pool) congestion level (e.g., CBR). For example, applicability of the proposed rules and/or related parameter configuration values may be specifically configured (or differently or independently configured) for an SL HARQ feedback scheme (e.g., NACK-only feedback, ACK/NACK feedback). For example, applicability of the proposed rules and/or related parameter configuration values may be specifically configured (or differently or independently configured) for HARQ feedback enabled MAC PDU transmission. For example, applicability of the proposed rules and/or related parameter configuration values may be specifically configured (or differently or independently configured) for HARQ feedback disabled MAC PDU transmission. For example, applicability of the proposed rules and/or related parameter configuration values may be specifically configured (or differently or independently configured) depending on whether an SL HARQ feedback reporting operation based on a PUCCH is configured. For example, applicability of the proposed rules and/or related parameter configuration values may be specifically configured (or differently or independently configured) depending on whether pre-emption or pre-emption-based resource reselection is performed. For example, applicability of the proposed rules and/or related parameter configuration values may be specifically configured (or differently or independently configured) depending on whether re-evaluation or re-evaluation-based resource reselection is performed. For example, applicability of the proposed rules and/or related parameter configuration values may be specifically configured (or differently or independently configured) for (L2 or L1) source and/or destination identifiers. For example, applicability of the proposed rules and/or related parameter configuration values may be specifically configured (or differently or independently configured) for (L2 or L1) a combination of source ID and destination ID. For example, applicability of the proposed rules and/or related parameter configuration values may be specifically configured (or differently or independently configured) for (L2 or L1) a combination of a pair of source ID and destination ID and cast type. For example, applicability of the proposed rules and/or related parameter configuration values may be specifically configured (or differently or independently configured) for a direction of a pair of source layer ID and destination layer ID. For example, applicability of the proposed rules and/or related parameter configuration values may be specifically configured (or differently or independently configured) for a PC5 RRC connection/link. For example, applicability of the proposed rules and/or related parameter configuration values may be specifically configured (or differently or independently configured) depending on whether SL DRX is performed. For example, applicability of the proposed rules and/or related parameter configuration values may be specifically configured (or differently or independently configured) depending on whether SL DRX is supported. For example, applicability of the proposed rules and/or related parameter configuration values may be specifically configured (or differently or independently configured) for SL mode type (e.g., resource allocation mode 1 or resource allocation mode 2). For example, applicability of the proposed rules and/or related parameter configuration values may be specifically configured (or differently or independently configured) for a case of performing (a)periodic resource reservation. For example, applicability of the proposed rules and/or related parameter configuration values may be specifically configured (or differently or independently configured) for a Tx profile (e.g., a Tx profile indicating that sidelink DRX operation is supported for a service, or a Tx profile indicating that sidelink DRX operation is not required for a service).

Applicability of the proposed schemes and proposed rules (and/or related parameter configuration values) of the present disclosure may also be applied to mmWave sidelink operations.

For example, in the present disclosure, applicability of the proposed rules and/or related parameter configuration values may be specifically configured/allowed (or differently or independently configured/allowed) for service type. For example, applicability of the proposed rules and/or related parameter configuration values may be specifically configured/allowed (or differently or independently configured/allowed) for (LCH or service) priority. For example, applicability of the proposed rules and/or related parameter configuration values may be specifically configured/allowed (or differently or independently configured/allowed) for QoS requirements (e.g., latency, reliability, minimum communication range). For example, applicability of the proposed rules and/or related parameter configuration values may be specifically configured/allowed (or differently or independently configured/allowed) for a PQI parameter. For example, applicability of the proposed rules and/or related parameter configuration values may be specifically configured/allowed (or differently or independently configured/allowed) for SL HARQ feedback ENABLED LCH/MAC PDU transmission. For example, applicability of the proposed rules and/or related parameter configuration values may be specifically configured/allowed (or differently or independently configured/allowed) for SL HARQ feedback DISABLED LCH/MAC PDU transmission. For example, applicability of the proposed rules and/or related parameter configuration values may be specifically configured/allowed (or differently or independently configured/allowed) for CBR measurement values of a resource pool. For example, applicability of the proposed rules and/or related parameter configuration values may be specifically configured/allowed (or differently or independently configured/allowed) for SL cast type (e.g., unicast, groupcast, broadcast). For example, applicability of the proposed rules and/or related parameter configuration values may be specifically configured/allowed (or differently or independently configured/allowed) for SL groupcast HARQ feedback options (e.g., NACK-only feedback, ACK/NACK feedback, NACK-only feedback based on TX-RX distance). For example, applicability of the proposed rules and/or related parameter configuration values may be specifically configured/allowed (or differently or independently configured/allowed) for SL mode 1 CG type (e.g., SL CG type 1 or SL CG type 2). For example, applicability of the proposed rules and/or related parameter configuration values may be specifically configured/allowed (or differently or independently configured/allowed) for SL mode type (e.g., mode 1 or mode 2). For example, applicability of the proposed rules and/or related parameter configuration values may be specifically configured/allowed (or differently or independently configured/allowed) for a resource pool. For example, applicability of the proposed rules and/or related parameter configuration values may be specifically configured/allowed (or differently or independently configured/allowed) depending on whether a PSFCH resource is configured in a resource pool. For example, applicability of the proposed rules and/or related parameter configuration values may be specifically configured/allowed (or differently or independently configured/allowed) for a source (L2) ID. For example, applicability of the proposed rules and/or related parameter configuration values may be specifically configured/allowed (or differently or independently configured/allowed) for a destination (L2) ID. For example, applicability of the proposed rules and/or related parameter configuration values may be specifically configured/allowed (or differently or independently configured/allowed) for a PC5 RRC connection/link. For example, applicability of the proposed rules and/or related parameter configuration values may be specifically configured/allowed (or differently or independently configured/allowed) for an SL link. For example, applicability of the proposed rules and/or related parameter configuration values may be specifically configured/allowed (or differently or independently configured/allowed) for connection state with a BS (e.g., RRC CONNECTED state, IDLE state, INACTIVE state). For example, applicability of the proposed rules and/or related parameter configuration values may be specifically configured/allowed (or differently or independently configured/allowed) for an SL HARQ process (ID). For example, applicability of the proposed rules and/or related parameter configuration values may be specifically configured/allowed (or differently or independently configured/allowed) depending on whether SL DRX operation is performed by a TX UE or an RX UE. For example, applicability of the proposed rules and/or related parameter configuration values may be specifically configured/allowed (or differently or independently configured/allowed) for whether the UE is a power saving (TX or RX) UE. For example, applicability of the proposed rules and/or related parameter configuration values may be specifically configured/allowed (or differently or independently configured/allowed) in cases where PSFCH TX and PSFCH RX (and/or multiple PSFCH TXs exceeding UE capability) overlap (and/or PSFCH TX (and/or PSFCH RX) is omitted) from the perspective of a specific UE. For example, applicability of the proposed rules and/or related parameter configuration values may be specifically configured/allowed (or differently or independently configured/allowed) in cases where an RX UE successfully receives (re-)transmission of PSCCH and/or PSSCH from a TX UE.

For example, in the present disclosure, wording of "configured (or designated)" may be broadly interpreted as a form in which a BS notifies a UE through pre-defined (physical layer or upper layer) channels/signals (e.g., SIB, RRC, MAC CE), and/or as a form provided through pre-configuration, and/or as a form in which a UE notifies another UE through pre-defined (physical layer or upper layer) channels/signals (e.g., SL MAC CE, PC5 RRC).

For example, in the present disclosure, wording of "PSFCH" may be broadly interpreted as (NR or LTE) PSSCH, and/or (NR or LTE) PSCCH, and/or (NR or LTE) SL SSB, and/or UL channels/signals. In addition, the proposed schemes of the present disclosure may be combined with each other and used in an extended manner (as a new form of scheme).

For example, in the present disclosure, a specific threshold may mean a threshold that is pre-defined or (pre-)configured by an upper layer (including an application layer) of a network, BS, or UE. For example, in the present disclosure, a specific configured value may mean a value that is pre-defined or (pre-)configured by an upper layer (including an application layer) of a network, BS, or UE. For example, an operation configured by the network/BS may mean that a BS (pre-)configures a UE through upper layer RRC signaling, configures/signals a UE through MAC CE, or signals a UE through DCI.

In an embodiment of the present disclosure, a message may be replaced with and interpreted as a control message, a data message, a signal, a data signal, and/or a control signal.

In an embodiment of the present disclosure, a beam management operation may be replaced with and interpreted as beam selection, spatial filter selection, beam pairing, spatial filter pairing, beam failure recovery, spatial filter recovery, beam sweeping, spatial filter sweeping, beam switching, spatial filter switching, measurement of reference signal (RS) resources, reporting of measurement of RS resources, beam reporting, spatial filter reporting, and so on.

In an embodiment of the present disclosure, a beam may be replaced with and interpreted as an RS, RS resources, or spatial filter resources.

In an embodiment of the present disclosure, an RS may be replaced with and interpreted as RS resources or spatial filter resources.

In an embodiment of the present disclosure, a transmitting UE may be replaced with and interpreted as a UE transmitting a beam, a UE transmitting beam RS, or a UE transmitting beam RS resources.

In an embodiment of the present disclosure, a receiving UE may be replaced with and interpreted as a UE receiving a beam, a UE receiving beam RS, or a UE receiving beam RS resources.

In an embodiment of the present disclosure, information on a transmission beam or reception beam transmitted/received by a UE may be replaced with and interpreted as RS (reference signal) resource information associated with the transmission beam and RS (reference signal) resource information associated with the reception beam.

In an embodiment of the present disclosure, a direct communication request (DCR) and/or direct communication accept (DCA) message may be replaced with and interpreted as a PC5-S DCR message and/or a PC5-S DCA message.

In an embodiment of the present disclosure, spatial setting and/or transmission configuration indication (TCI) information and/or quasi-co-location (QCL) information and/or beams may refer to each other and/or may be replaced with and interpreted as beam-related information, beam direction, or spatial domain transmission or reception filters.

In an embodiment of the present disclosure, a beam may be replaced with and interpreted as a transmission beam, a reception beam, a spatial filter, a spatial transmission (TX) filter, a spatial domain transmission (TX) filter, a spatial reception (RX) filter, or a spatial domain reception (RX) filter.

In an embodiment of the present disclosure, a transmission/transmit beam may be replaced with and interpreted as a spatial transmission (TX) filter or a spatial domain transmission (TX) filter.

In an embodiment of the present disclosure, a reception beam may be replaced with and interpreted as a spatial reception (RX) filter or a spatial domain reception (RX) filter.

In an embodiment of the present disclosure, spatial setting information (or beam information) for transmission being the same may mean that the spatial domain TX filter of a UE is the same for two different transmission signals. In an embodiment of the present disclosure, spatial setting information (or beam information) for reception being the same may mean that two different reception signals are in a QCL 'TypeD' relationship and/or use the same spatial RX parameter.

For example, in the present disclosure, a control message (or signal) and/or a data message (or signal) may mean a control message (or signal) and/or a data message (or signal) for wireless communication (e.g., LTE communication, NR communication, 6G communication, Wi-Fi communication, Bluetooth communication, and/or other wireless communication), not a radar signal.

For example, source ID and destination ID disclosed in the present disclosure may mean source layer 1 ID and destination layer 1 ID and/or may mean source layer 2 ID and destination layer 2 ID.

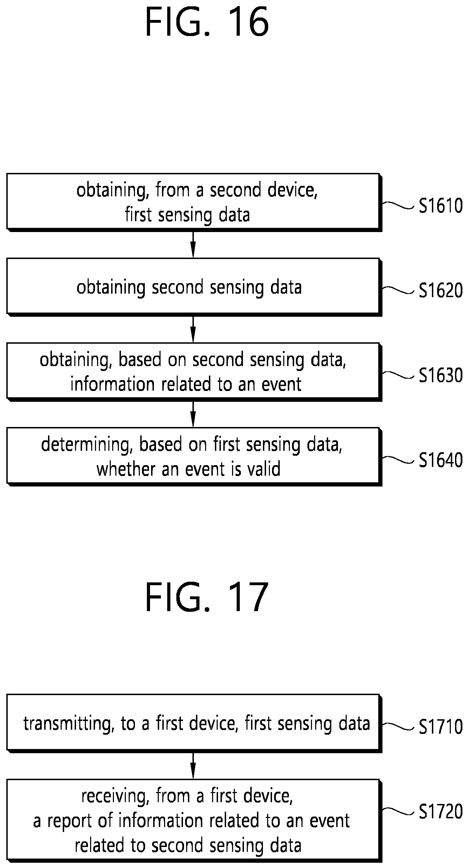

FIG. 16 shows a method for a first device to perform wireless communication, based on an embodiment of the present disclosure. The embodiment of FIG. 16 may be combined with various embodiments of the present disclosure.

Referring to FIG. 16, for example, in step S1610, the first device may obtain, from a second device, first sensing data. For example, in step S1620, the first device may obtain, second sensing data. For example, in step S1630, the first device may obtain, based on the second sensing data, information related to an event. For example, in step S1640, the first device may determine, based on the first sensing data, whether the event is valid. For example, the first sensing data may include a system managing at least one of area information, location information, or object information.

For example, the validity for the event may be determined based on whether the first sensing data includes the information related to the event.

For example, the method furter comprises reporting, to the second device, based on that the event has been determined to be valid, the information related to the event.

For example, based on that the first sensing data does not include the information related to the event, the event may be determined to be valid.

For example, based on that the first sensing data includes the information related to the event and based on that the event satisfies an update condition for the event, the event may be determined to be valid.

For example, the update condition for the event may be related to a time stamp at which the event occurred.

For example, the update condition for the event may be further related to a validity period for the event.

For example, the update condition for the event may be further related to an expiration time for the event.

For example, the event may be related to a no parking and no stopping zone.

For example, the system may be a high-definition (HD) map.

For example, the HD map may include information related to related to a smart crosswalk.

For example, the event may be related to eithor tollgate bottleneck formation or tollgate bottleneck clearance.

For example, information related to an object related to the first sensing data may include information related to an autonomous delivery robot.

For example, in the present disclosure, an HD map may include at least one of the following.

For example, in the present disclosure, an HD map may include a static geometry layer. For example, the static geometry layer (e.g., an HD map related to the static geometry layer) may include at least one of information related to lane centerlines, information related to lane boundaries (e.g., polylines), information related to curbs/shoulders, information related to precise curvatures, or information related to slopes.

For example, in the present disclosure, an HD map may include a digital traffic infrastructure layer. For example, the digital traffic infrastructure layer (e.g., an HD map related to the digital traffic infrastructure layer) may include at least one of information related to signal IDs, information related to signs, information related to variable message signs (VMS), or information related to smart crosswalks.

For example, in the present disclosure, an HD map may include a regulation/restriction area layer. For example, the regulation/restriction area layer (e.g., an HD map related to the regulation/restriction area layer) may include at least one of information related to bus/freight-only lanes, information related to no-parking zones, or information related to dangerous goods transport restriction areas.

For example, in the present disclosure, an HD map may include a dynamic event/crowd-sourcing layer. For example, the dynamic event/crowd-sourcing layer (e.g., an HD map related to the dynamic event/crowd-sourcing layer) may include at least one of information related to construction, information related to accidents, information related to variable speeds, or information related to road freezing.

For example, in the present disclosure, an HD map may include an environment sensor fusion layer. For example, the environment sensor fusion layer (e.g., an HD map related to the environment sensor fusion layer) may include at least one of information related to LiDAR intensity voxels, information related to mmWave radar reflectivity, or information related to camera scene graphs.

For example, in the present disclosure, an HD map may include a road-IoT metadata layer. For example, the road-IoT metadata layer (e.g., an HD map related to the road-IoT metadata layer) may include at least one of information related to RSUs, information related to C-V2X RSRP heat maps, or information related to 5G coverage.

For example, in the present disclosure, an HD map may include a multi-layer 3D indoor/underground linkage layer. For example, the multi-layer 3D indoor/underground linkage layer (e.g., an HD map related to the multi-layer 3D indoor/underground linkage layer) may include information related to multi-floor parking buildings/underpasses/tunnels.

For example, in the present disclosure, an HD map may include a digital twin/simulation layer. For example, the digital twin/simulation layer (e.g., an HD map related to the digital twin/simulation layer) may include information related to artificial terrain/traffic flow simulation models.

For example, in the present disclosure, event information may include at least one of the following.

For example, in the present disclosure, event information related to safety/risk may include at least one of information related to cargo/tire debris dropped on a road, information related to mis-merge due to temporary lane change in a construction section, or information related to black ice detection (e.g., fused road surface temperature/friction coefficient).

For example, in the present disclosure, event information related to regulation/violation may include at least one of information related to violation of bus-only lane time restrictions, information related to exceeding speed limits in front of schools (e.g., 30 km/h), or information related to long-term occupation of electric vehicle charging zones.

For example, in the present disclosure, event information related to traffic flow may include at least one of information related to prediction of tollgate bottleneck occurrence/release, information related to platoon train reorganization (e.g., based on inter-vehicle distance), or information related to ramp metering congestion level change.

For example, in the present disclosure, event information related to special/emergency may include at least one of information related to ambulance approach, information related to issuance of an emergency vehicle approach (EMA) signal, or information related to disclosure of detours in wildfire/heavy rain areas.

For example, in the present disclosure, event information related to infrastructure state may include at least one of information related to large-scale occurrence of streetlight failures, information related to detection of V2X RSU communication shadow areas, or information related to exceeding vibration/displacement thresholds of bridges.

For example, in the present disclosure, event information related to user experience/convenience may include at least one of information related to actual measurement of drive-through order waiting time, information related to estimation of parking lot available spaces/queues, or information related to entry into AR tourism content sections.

For example, in the present disclosure, information related to (sensing target) objects may include at least one of the following.

For example, in the present disclosure, information related to vehicles/mobility as (sensing target) objects may include at least one of information related to passenger cars/cargo trucks/buses/articulated large vehicles, information related to level-4 autonomous shuttles, information related to towing trailers, or information related to forklifts.

For example, in the present disclosure, information related to micro-mobility as (sensing target) objects may include at least one of information related to electric scooters, information related to autonomous delivery robots, information related to electric wheelchairs, or information related to drones (e.g., low-altitude L-AAM).

For example, in the present disclosure, information related to vulnerable road users (VRU) as (sensing target) objects may include at least one of information related to children/elderly/visually impaired pedestrians, information related to group processions, or information related to dog leashes.

For example, in the present disclosure, information related to infrastructure facilities as (sensing target) objects may include at least one of information related to smart traffic lights, information related to mobile RSUs, information related to variable lane indicators, or information related to road heating panels.

For example, in the present disclosure, information related to road assets/obstacles as (sensing target) objects may include at least one of information related to fixed/movable work zone barriers, information related to cones, information related to drums, information related to fallen objects, or information related to anti-slip mats.

For example, in the present disclosure, information related to environmental elements as (sensing target) objects may include at least one of information related to PM2.5 spots detected by air-quality sensors, information related to snowfall/freezing, information related to flood inundation boundaries, or information related to wild animals (e.g., deer/wild boars).

For example, in the present disclosure, information related to digital objects as (sensing target) objects may include at least one of information related to virtual AR signs, or information related to ghost nodes (e.g., geofence) that exist only as V2X messages.

The proposed method can be applied to the device, based on various embodiments of the present disclosure. For example, first, the processor 102 of the first device 100 may obtain, from a second device, first sensing data (e.g., the processor 102 of the first device 100 may control the transceiver 106 to obtain, from a second device, first sensing data). For example, in addition, the processor 102 of the first device 100 may obtain, second sensing data (e.g., the processor 102 of the first device 100 may control the transceiver 106 to obtain, second sensing data). For example, in addition, the processor 102 of the first device 100 may obtain, based on the second sensing data, information related to an event (e.g., the processor 102 of the first device 100 may control the transceiver 106 to obtain, based on the second sensing data, information related to an event). For example, in addition, the processor 102 of the first device 100 may determine, based on the first sensing data, whether the event is valid (e.g., the processor 102 of the first device 100 may control the transceiver 106 to determine, based on the first sensing data, whether the event is valid). For example, the first sensing data may include a system managing at least one of area information, location information, or object information.

Based on an embodiment, a first device may be provided. For example, the first device may include: at least one transceiver; at least one processor; and at least one memory connected to the at least one processor and storing instructions, and the instructions, based on being executed by the at least one processor, may cause the first device to perform operations comprising: obtaining, from a second device, first sensing data; obtaining, second sensing data; obtaining, based on the second sensing data, information related to an event; and determining, based on the first sensing data, whether the event is valid. For example, the first sensing data may include a system managing at least one of area information, location information, or object information.

For example, the validity for the event may be determined based on whether the first sensing data includes the information related to the event.

For example, the method furter comprises reporting, to the second device, based on that the event has been determined to be valid, the information related to the event.

For example, based on that the first sensing data does not include the information related to the event, the event may be determined to be valid.

For example, based on that the first sensing data includes the information related to the event and based on that the event satisfies an update condition for the event, the event may be determined to be valid.

For example, the update condition for the event may be related to a time stamp at which the event occurred.

For example, the update condition for the event may be further related to a validity period for the event.

For example, the update condition for the event may be further related to an expiration time for the event.

For example, the event may be related to a no parking and no stopping zone.

For example, the system may be a high-definition (HD) map.

For example, the HD map may include information related to related to a smart crosswalk.

For example, the event may be related to eithor tollgate bottleneck formation or tollgate bottleneck clearance.

For example, information related to an object related to the first sensing data may include information related to an autonomous delivery robot.

For example, in the present disclosure, an HD map may include at least one of the following.

For example, in the present disclosure, an HD map may include a static geometry layer. For example, the static geometry layer (e.g., an HD map related to the static geometry layer) may include at least one of information related to lane centerlines, information related to lane boundaries (e.g., polylines), information related to curbs/shoulders, information related to precise curvatures, or information related to slopes.

For example, in the present disclosure, an HD map may include a digital traffic infrastructure layer. For example, the digital traffic infrastructure layer (e.g., an HD map related to the digital traffic infrastructure layer) may include at least one of information related to signal IDs, information related to signs, information related to variable message signs (VMS), or information related to smart crosswalks.

For example, in the present disclosure, an HD map may include a regulation/restriction area layer. For example, the regulation/restriction area layer (e.g., an HD map related to the regulation/restriction area layer) may include at least one of information related to bus/freight-only lanes, information related to no-parking zones, or information related to dangerous goods transport restriction areas.

For example, in the present disclosure, an HD map may include a dynamic event/crowd-sourcing layer. For example, the dynamic event/crowd-sourcing layer (e.g., an HD map related to the dynamic event/crowd-sourcing layer) may include at least one of information related to construction, information related to accidents, information related to variable speeds, or information related to road freezing.

For example, in the present disclosure, an HD map may include an environment sensor fusion layer. For example, the environment sensor fusion layer (e.g., an HD map related to the environment sensor fusion layer) may include at least one of information related to LiDAR intensity voxels, information related to mmWave radar reflectivity, or information related to camera scene graphs.

For example, in the present disclosure, an HD map may include a road-IoT metadata layer. For example, the road-IoT metadata layer (e.g., an HD map related to the road-IoT metadata layer) may include at least one of information related to RSUs, information related to C-V2X RSRP heat maps, or information related to 5G coverage.

For example, in the present disclosure, an HD map may include a multi-layer 3D indoor/underground linkage layer. For example, the multi-layer 3D indoor/underground linkage layer (e.g., an HD map related to the multi-layer 3D indoor/underground linkage layer) may include information related to multi-floor parking buildings/underpasses/tunnels.

For example, in the present disclosure, an HD map may include a digital twin/simulation layer. For example, the digital twin/simulation layer (e.g., an HD map related to the digital twin/simulation layer) may include information related to artificial terrain/traffic flow simulation models.

For example, in the present disclosure, event information may include at least one of the following.

For example, in the present disclosure, event information related to safety/risk may include at least one of information related to cargo/tire debris dropped on a road, information related to mis-merge due to temporary lane change in a construction section, or information related to black ice detection (e.g., fused road surface temperature/friction coefficient).

For example, in the present disclosure, event information related to regulation/violation may include at least one of information related to violation of bus-only lane time restrictions, information related to exceeding speed limits in front of schools (e.g., 30 km/h), or information related to long-term occupation of electric vehicle charging zones.

For example, in the present disclosure, event information related to traffic flow may include at least one of information related to prediction of tollgate bottleneck occurrence/release, information related to platoon train reorganization (e.g., based on inter-vehicle distance), or information related to ramp metering congestion level change.

For example, in the present disclosure, event information related to special/emergency may include at least one of information related to ambulance approach, information related to issuance of an emergency vehicle approach (EMA) signal, or information related to disclosure of detours in wildfire/heavy rain areas.

For example, in the present disclosure, event information related to infrastructure state may include at least one of information related to large-scale occurrence of streetlight failures, information related to detection of V2X RSU communication shadow areas, or information related to exceeding vibration/displacement thresholds of bridges.

For example, in the present disclosure, event information related to user experience/convenience may include at least one of information related to actual measurement of drive-through order waiting time, information related to estimation of parking lot available spaces/queues, or information related to entry into AR tourism content sections.

For example, in the present disclosure, information related to (sensing target) objects may include at least one of the following.

For example, in the present disclosure, information related to vehicles/mobility as (sensing target) objects may include at least one of information related to passenger cars/cargo trucks/buses/articulated large vehicles, information related to level-4 autonomous shuttles, information related to towing trailers, or information related to forklifts.

For example, in the present disclosure, information related to micro-mobility as (sensing target) objects may include at least one of information related to electric scooters, information related to autonomous delivery robots, information related to electric wheelchairs, or information related to drones (e.g., low-altitude L-AAM).

For example, in the present disclosure, information related to vulnerable road users (VRU) as (sensing target) objects may include at least one of information related to children/elderly/visually impaired pedestrians, information related to group processions, or information related to dog leashes.

For example, in the present disclosure, information related to infrastructure facilities as (sensing target) objects may include at least one of information related to smart traffic lights, information related to mobile RSUs, information related to variable lane indicators, or information related to road heating panels.

For example, in the present disclosure, information related to road assets/obstacles as (sensing target) objects may include at least one of information related to fixed/movable work zone barriers, information related to cones, information related to drums, information related to fallen objects, or information related to anti-slip mats.

For example, in the present disclosure, information related to environmental elements as (sensing target) objects may include at least one of information related to PM2.5 spots detected by air-quality sensors, information related to snowfall/freezing, information related to flood inundation boundaries, or information related to wild animals (e.g., deer/wild boars).

For example, in the present disclosure, information related to digital objects as (sensing target) objects may include at least one of information related to virtual AR signs, or information related to ghost nodes (e.g., geofence) that exist only as V2X messages.

Based on an embodiment, a processing device (adapted to control a first device) may be provided. For example, the processing device may include: at least one processor; and at least one memory connected to the at least one processor and storing instructions, and the instructions, based on being executed by the at least one processor, may cause a first device to perform operations comprising: obtaining, from a second device, first sensing data; obtaining, second sensing data; obtaining, based on the second sensing data, information related to an event; and determining, based on the first sensing data, whether the event is valid. For example, the first sensing data may include a system managing at least one of area information, location information, or object information.

Based on an embodiment, a non-transitory computer-readable storage medium storing instructions may be provided. For example, the instructions, based on being executed, may cause a first device to perform operations comprising: obtaining, from a second device, first sensing data; obtaining, second sensing data; obtaining, based on the second sensing data, information related to an event; and determining, based on the first sensing data, whether the event is valid. For example, the first sensing data may include a system managing at least one of area information, location information, or object information.

FIG. 17 shows a method for a second device to perform wireless communication, based on an embodiment of the present disclosure. The embodiment of FIG. 17 may be combined with various embodiments of the present disclosure.

Referring to FIG. 17, for example, in step S1710, the second device may transmit, to a first device, first sensing data. For example, in step S1720, the second device may receive, from the first device, a report of information related to an event related to second sensing data. For example, the event may be received based on that the event is determined to be valid. For example, the validity of the event is determined based on the transmitted first sensing data.

For example, the validity for the event may be determined based on whether the first sensing data includes the information related to the event.

For example, based on that the first sensing data does not include the information related to the event, the event may be determined to be valid.

For example, based on that the first sensing data includes the information related to the event and based on that the event satisfies an update condition for the event, the event may be determined to be valid.

For example, the update condition for the event may be related to a time stamp at which the event occurred.

For example, the update condition for the event may be further related to a validity period for the event.

For example, the update condition for the event may be further related to an expiration time for the event.

For example, the event may be related to a no parking and no stopping zone.

For example, the system may be a high-definition (HD) map.

For example, the HD map may include information related to related to a smart crosswalk.

For example, the event may be related to eithor tollgate bottleneck formation or tollgate bottleneck clearance.

For example, information related to an object related to the first sensing data may include information related to an autonomous delivery robot.

For example, in the present disclosure, an HD map may include at least one of the following.

For example, in the present disclosure, an HD map may include a static geometry layer. For example, the static geometry layer (e.g., an HD map related to the static geometry layer) may include at least one of information related to lane centerlines, information related to lane boundaries (e.g., polylines), information related to curbs/shoulders, information related to precise curvatures, or information related to slopes.

For example, in the present disclosure, an HD map may include a digital traffic infrastructure layer. For example, the digital traffic infrastructure layer (e.g., an HD map related to the digital traffic infrastructure layer) may include at least one of information related to signal IDs, information related to signs, information related to variable message signs (VMS), or information related to smart crosswalks.

For example, in the present disclosure, an HD map may include a regulation/restriction area layer. For example, the regulation/restriction area layer (e.g., an HD map related to the regulation/restriction area layer) may include at least one of information related to bus/freight-only lanes, information related to no-parking zones, or information related to dangerous goods transport restriction areas.

For example, in the present disclosure, an HD map may include a dynamic event/crowd-sourcing layer. For example, the dynamic event/crowd-sourcing layer (e.g., an HD map related to the dynamic event/crowd-sourcing layer) may include at least one of information related to construction, information related to accidents, information related to variable speeds, or information related to road freezing.

For example, in the present disclosure, an HD map may include an environment sensor fusion layer. For example, the environment sensor fusion layer (e.g., an HD map related to the environment sensor fusion layer) may include at least one of information related to LiDAR intensity voxels, information related to mmWave radar reflectivity, or information related to camera scene graphs.

For example, in the present disclosure, an HD map may include a road-IoT metadata layer. For example, the road-IoT metadata layer (e.g., an HD map related to the road-IoT metadata layer) may include at least one of information related to RSUs, information related to C-V2X RSRP heat maps, or information related to 5G coverage.

For example, in the present disclosure, an HD map may include a multi-layer 3D indoor/underground linkage layer. For example, the multi-layer 3D indoor/underground linkage layer (e.g., an HD map related to the multi-layer 3D indoor/underground linkage layer) may include information related to multi-floor parking buildings/underpasses/tunnels.

For example, in the present disclosure, an HD map may include a digital twin/simulation layer. For example, the digital twin/simulation layer (e.g., an HD map related to the digital twin/simulation layer) may include information related to artificial terrain/traffic flow simulation models.

For example, in the present disclosure, event information may include at least one of the following.

For example, in the present disclosure, event information related to safety/risk may include at least one of information related to cargo/tire debris dropped on a road, information related to mis-merge due to temporary lane change in a construction section, or information related to black ice detection (e.g., fused road surface temperature/friction coefficient).

For example, in the present disclosure, event information related to regulation/violation may include at least one of information related to violation of bus-only lane time restrictions, information related to exceeding speed limits in front of schools (e.g., 30 km/h), or information related to long-term occupation of electric vehicle charging zones.

For example, in the present disclosure, event information related to traffic flow may include at least one of information related to prediction of tollgate bottleneck occurrence/release, information related to platoon train reorganization (e.g., based on inter-vehicle distance), or information related to ramp metering congestion level change.

For example, in the present disclosure, event information related to special/emergency may include at least one of information related to ambulance approach, information related to issuance of an emergency vehicle approach (EMA) signal, or information related to disclosure of detours in wildfire/heavy rain areas.

For example, in the present disclosure, event information related to infrastructure state may include at least one of information related to large-scale occurrence of streetlight failures, information related to detection of V2X RSU communication shadow areas, or information related to exceeding vibration/displacement thresholds of bridges.

For example, in the present disclosure, event information related to user experience/convenience may include at least one of information related to actual measurement of drive-through order waiting time, information related to estimation of parking lot available spaces/queues, or information related to entry into AR tourism content sections.

For example, in the present disclosure, information related to (sensing target) objects may include at least one of the following.

For example, in the present disclosure, information related to vehicles/mobility as (sensing target) objects may include at least one of information related to passenger cars/cargo trucks/buses/articulated large vehicles, information related to level-4 autonomous shuttles, information related to towing trailers, or information related to forklifts.

For example, in the present disclosure, information related to micro-mobility as (sensing target) objects may include at least one of information related to electric scooters, information related to autonomous delivery robots, information related to electric wheelchairs, or information related to drones (e.g., low-altitude L-AAM).

For example, in the present disclosure, information related to vulnerable road users (VRU) as (sensing target) objects may include at least one of information related to children/elderly/visually impaired pedestrians, information related to group processions, or information related to dog leashes.

For example, in the present disclosure, information related to infrastructure facilities as (sensing target) objects may include at least one of information related to smart traffic lights, information related to mobile RSUs, information related to variable lane indicators, or information related to road heating panels.

For example, in the present disclosure, information related to road assets/obstacles as (sensing target) objects may include at least one of information related to fixed/movable work zone barriers, information related to cones, information related to drums, information related to fallen objects, or information related to anti-slip mats.

For example, in the present disclosure, information related to environmental elements as (sensing target) objects may include at least one of information related to PM2.5 spots detected by air-quality sensors, information related to snowfall/freezing, information related to flood inundation boundaries, or information related to wild animals (e.g., deer/wild boars).

For example, in the present disclosure, information related to digital objects as (sensing target) objects may include at least one of information related to virtual AR signs, or information related to ghost nodes (e.g., geofence) that exist only as V2X messages.

The proposed method can be applied to the device, based on various embodiments of the present disclosure. For example, first, the processor 202 of the second device 200 may transmit, to a first device, first sensing data (e.g., the processor 202 of the second device 200 may control the transceiver 206 to transmit, to a first device, first sensing data). For example, in addition, the processor 202 of the second device 200 may receive, from the first device, a report of information related to an event related to second sensing data (e.g., the processor 202 of the second device 200 may control the transceiver 206 to receive, from the first device, a report of information related to an event related to second sensing data). For example, the event may be received based on that the event is determined to be valid. For example, the validity of the event is determined based on the transmitted first sensing data.

Based on an embodiment, a second device may be provided. For example, the second device may include: at least one transceiver; at least one processor; and at least one memory connected to the at least one processor and storing instructions, and the instructions, based on being executed by the at least one processor, may cause the second device to perform operations comprising: transmitting, to a first device, first sensing data; and receiving, from the first device, a report of information related to an event related to second sensing data. For example, the event may be received based on that the event is determined to be valid. For example, the validity of the event is determined based on the transmitted first sensing data.

For example, the validity for the event may be determined based on whether the first sensing data includes the information related to the event.

For example, based on that the first sensing data does not include the information related to the event, the event may be determined to be valid.

For example, based on that the first sensing data includes the information related to the event and based on that the event satisfies an update condition for the event, the event may be determined to be valid.

For example, the update condition for the event may be related to a time stamp at which the event occurred.

For example, the update condition for the event may be further related to a validity period for the event.

For example, the update condition for the event may be further related to an expiration time for the event.

For example, the event may be related to a no parking and no stopping zone.

For example, the system may be a high-definition (HD) map.

For example, the HD map may include information related to related to a smart crosswalk.

For example, the event may be related to eithor tollgate bottleneck formation or tollgate bottleneck clearance.

For example, information related to an object related to the first sensing data may include information related to an autonomous delivery robot.

For example, in the present disclosure, an HD map may include at least one of the following.

For example, in the present disclosure, an HD map may include a static geometry layer. For example, the static geometry layer (e.g., an HD map related to the static geometry layer) may include at least one of information related to lane centerlines, information related to lane boundaries (e.g., polylines), information related to curbs/shoulders, information related to precise curvatures, or information related to slopes.

For example, in the present disclosure, an HD map may include a digital traffic infrastructure layer. For example, the digital traffic infrastructure layer (e.g., an HD map related to the digital traffic infrastructure layer) may include at least one of information related to signal IDs, information related to signs, information related to variable message signs (VMS), or information related to smart crosswalks.

For example, in the present disclosure, an HD map may include a regulation/restriction area layer. For example, the regulation/restriction area layer (e.g., an HD map related to the regulation/restriction area layer) may include at least one of information related to bus/freight-only lanes, information related to no-parking zones, or information related to dangerous goods transport restriction areas.

For example, in the present disclosure, an HD map may include a dynamic event/crowd-sourcing layer. For example, the dynamic event/crowd-sourcing layer (e.g., an HD map related to the dynamic event/crowd-sourcing layer) may include at least one of information related to construction, information related to accidents, information related to variable speeds, or information related to road freezing.

For example, in the present disclosure, an HD map may include an environment sensor fusion layer. For example, the environment sensor fusion layer (e.g., an HD map related to the environment sensor fusion layer) may include at least one of information related to LiDAR intensity voxels, information related to mmWave radar reflectivity, or information related to camera scene graphs.

For example, in the present disclosure, an HD map may include a road-IoT metadata layer. For example, the road-IoT metadata layer (e.g., an HD map related to the road-IoT metadata layer) may include at least one of information related to RSUs, information related to C-V2X RSRP heat maps, or information related to 5G coverage.

For example, in the present disclosure, an HD map may include a multi-layer 3D indoor/underground linkage layer. For example, the multi-layer 3D indoor/underground linkage layer (e.g., an HD map related to the multi-layer 3D indoor/underground linkage layer) may include information related to multi-floor parking buildings/underpasses/tunnels.

For example, in the present disclosure, an HD map may include a digital twin/simulation layer. For example, the digital twin/simulation layer (e.g., an HD map related to the digital twin/simulation layer) may include information related to artificial terrain/traffic flow simulation models.

For example, in the present disclosure, event information may include at least one of the following.

For example, in the present disclosure, event information related to safety/risk may include at least one of information related to cargo/tire debris dropped on a road, information related to mis-merge due to temporary lane change in a construction section, or information related to black ice detection (e.g., fused road surface temperature/friction coefficient).

For example, in the present disclosure, event information related to regulation/violation may include at least one of information related to violation of bus-only lane time restrictions, information related to exceeding speed limits in front of schools (e.g., 30 km/h), or information related to long-term occupation of electric vehicle charging zones.

For example, in the present disclosure, event information related to traffic flow may include at least one of information related to prediction of tollgate bottleneck occurrence/release, information related to platoon train reorganization (e.g., based on inter-vehicle distance), or information related to ramp metering congestion level change.

For example, in the present disclosure, event information related to special/emergency may include at least one of information related to ambulance approach, information related to issuance of an emergency vehicle approach (EMA) signal, or information related to disclosure of detours in wildfire/heavy rain areas.

For example, in the present disclosure, event information related to infrastructure state may include at least one of information related to large-scale occurrence of streetlight failures, information related to detection of V2X RSU communication shadow areas, or information related to exceeding vibration/displacement thresholds of bridges.

For example, in the present disclosure, event information related to user experience/convenience may include at least one of information related to actual measurement of drive-through order waiting time, information related to estimation of parking lot available spaces/queues, or information related to entry into AR tourism content sections.

For example, in the present disclosure, information related to (sensing target) objects may include at least one of the following.

For example, in the present disclosure, information related to vehicles/mobility as (sensing target) objects may include at least one of information related to passenger cars/cargo trucks/buses/articulated large vehicles, information related to level-4 autonomous shuttles, information related to towing trailers, or information related to forklifts.

For example, in the present disclosure, information related to micro-mobility as (sensing target) objects may include at least one of information related to electric scooters, information related to autonomous delivery robots, information related to electric wheelchairs, or information related to drones (e.g., low-altitude L-AAM).

For example, in the present disclosure, information related to vulnerable road users (VRU) as (sensing target) objects may include at least one of information related to children/elderly/visually impaired pedestrians, information related to group processions, or information related to dog leashes.

For example, in the present disclosure, information related to infrastructure facilities as (sensing target) objects may include at least one of information related to smart traffic lights, information related to mobile RSUs, information related to variable lane indicators, or information related to road heating panels.

For example, in the present disclosure, information related to road assets/obstacles as (sensing target) objects may include at least one of information related to fixed/movable work zone barriers, information related to cones, information related to drums, information related to fallen objects, or information related to anti-slip mats.

For example, in the present disclosure, information related to environmental elements as (sensing target) objects may include at least one of information related to PM2.5 spots detected by air-quality sensors, information related to snowfall/freezing, information related to flood inundation boundaries, or information related to wild animals (e.g., deer/wild boars).

For example, in the present disclosure, information related to digital objects as (sensing target) objects may include at least one of information related to virtual AR signs, or information related to ghost nodes (e.g., geofence) that exist only as V2X messages.

Based on an embodiment, a processing device (adapted to control a second device) may be provided. For example, the processing device may include: at least one processor; and at least one memory connected to the at least one processor and storing instructions, and the instructions, based on being executed by the at least one processor, may cause a second device to perform operations comprising: transmitting, to a first device, first sensing data; and receiving, from the first device, a report of information related to an event related to second sensing data. For example, the event may be received based on that the event is determined to be valid. For example, the validity of the event is determined based on the transmitted first sensing data.

Based on an embodiment, a non-transitory computer-readable storage medium storing instructions may be provided. For example, the instructions, based on being executed, may cause a second device to perform operations comprising: transmitting, to a first device, first sensing data; and receiving, from the first device, a report of information related to an event related to second sensing data. For example, the event may be received based on that the event is determined to be valid. For example, the validity of the event is determined based on the transmitted first sensing data.

To complete establishment of a single event, it may be limited for a single vehicle/sensor to provide all information required for establishment of the event, but by cooperatively transmitting through multiple unspecified vehicles/sensors passing near the event, the event situation may be checked more efficiently and more accurately.

The present disclosure separates/distributes sensing data between "a first device and a second device." The first device obtains first sensing data (including a region/location/object management system) from the second device to secure historical/regulation information, and obtains second sensing data by itself to measure a field situation. Then, the second sensing data is analyzed to extract event information (e.g., whether a violating vehicle exists), and based on the first sensing data, it is determined in real time "whether the event is worth reporting." Therefore, without a single sensor repeatedly capturing with a time gap, multiple UEs may cooperate to quickly complete a necessary/sufficient evidence set.

The validity check logic dynamically applies (i) minimum/maximum reporting interval, (ii) update conditions (timestamp/valid duration/expiry time, etc.), and (iii) policies by event type. As a result, wireless traffic due to duplicate reports is greatly reduced, and since the server receives only events with guaranteed freshness/consistency, an HD map may be accurately updated in real time.

In addition, the present disclosure is extended to various V2X scenarios such as no-parking zones, smart crosswalks, and tollgate bottlenecks. Through cooperative perception among sensors/UEs, limitations of a single device's view/failures are overcome, reliability of event detection and service quality (e.g., URLLC requirements) are improved, and ultimately, both safety and efficiency of an intelligent transportation/autonomous driving platform are enhanced.

Various embodiments of the present disclosure may be combined with each other, and among the above embodiments, some description, functions, procedures, proposals, methods, and/or operations may be omitted.

The proposed method may be applied to a device described below. First, a processor (202) of a receiving UE may configure at least one bandwidth part (e.g., BWP; bandwidth part). Then, the processor (202) of the receiving UE may control a transceiver (206) of the receiving UE to receive, on at least one BWP, physical channels related to inter-UE communication (e.g., sidelink (SL) communication) and/or reference signals related to inter-UE communication (e.g., sidelink (SL) communication) from a transmitting UE.

Hereinafter, device(s) to which various embodiments of the present disclosure can be applied will be described.

The various descriptions, functions, procedures, proposals, methods, and/or operational flowcharts of the present disclosure described in this document may be applied to, without being limited to, a variety of fields requiring wireless communication/connection (e.g., 5G) between devices.

Hereinafter, a description will be given in more detail with reference to the drawings. In the following drawings/-description, the same reference symbols may denote the same or corresponding hardware blocks, software blocks, or functional blocks unless described otherwise.

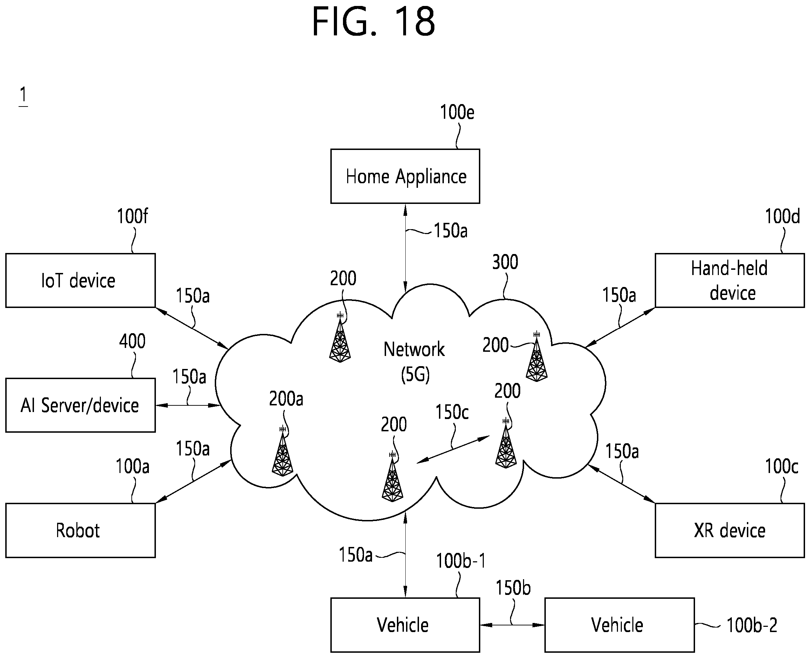

FIG. 18 shows a communication system 1, based on an embodiment of the present disclosure. The embodiments of FIG. 18 may be combined with various embodiments of the present disclosure, and among the above embodiments, some description, functions, procedures, proposals, methods, and/or operations may be omitted.

Referring to FIG. 18, a communication system 1 to which various embodiments of the present disclosure are applied includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous vehicle, and a vehicle capable of performing communication between vehicles. Herein, the vehicles may include an Unmanned Aerial Vehicle (UAV) (e.g., a drone) and/or an Aerial Vehicle (AV) (e.g., Advanced Air Mobility (AAM)). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

Here, wireless communication technology implemented in wireless devices 100a to 100f of the present disclosure may include Narrowband Internet of Things for low-power communication in addition to LTE, NR, and 6G. In this case, for example, NB-IoT technology may be an example of Low Power Wide Area Network (LPWAN) technology and may be implemented as standards such as LTE Cat NB1, and/or LTE Cat NB2, and is not limited to the name described above. Additionally or alternatively, the wireless communication technology implemented in the wireless devices 100a to 100f of the present disclosure may perform communication based on LTE-M technology. In this case, as an example, the LTE-M technology may be an example of the LPWAN and may be called by various names including enhanced Machine Type Communication (eMTC), and the like. For example, the LTE-M technology may be implemented as at least any one of various standards such as 1) LTE CAT 0, 2) LTE Cat M1, 3) LTE Cat M2, 4) LTE non-Bandwidth Limited (non-BL), 5) LTE-MTC, 6) LTE Machine Type Communication, and/or 7) LTE M, and is not limited to the name described above. Additionally or alternatively, the wireless communication technology implemented in the wireless devices 100a to 100f of the present disclosure may include at least one of Bluetooth, Low Power Wide Area Network (LPWAN), and ZigBee considering the low-power communication, and is not limited to the name described above. As an example, the ZigBee technology may generate personal area networks (PAN) related to small/low-power digital communication based on various standards including IEEE 802.15.4, and the like, and may be called by various names.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g. relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

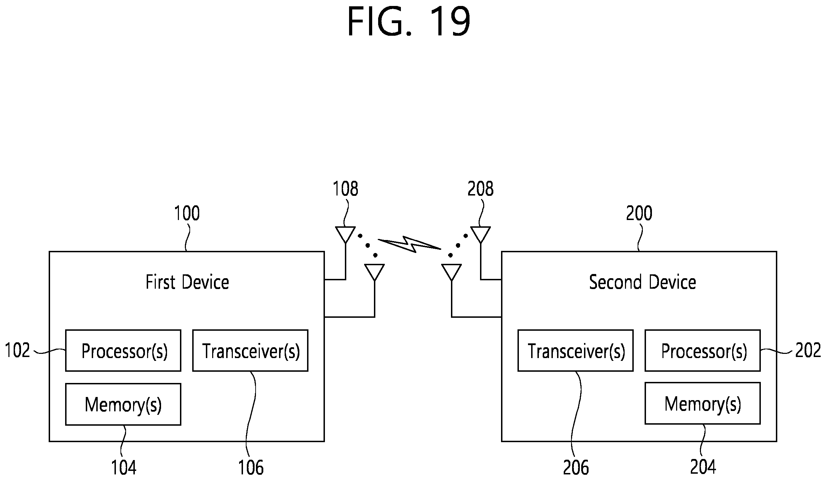

FIG. 19 shows wireless devices, based on an embodiment of the present disclosure. The embodiments of FIG. 19 may be combined with various embodiments of the present disclosure, and among the above embodiments, some description, functions, procedures, proposals, methods, and/or operations may be omitted.

Referring to FIG. 19, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 18.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cache memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

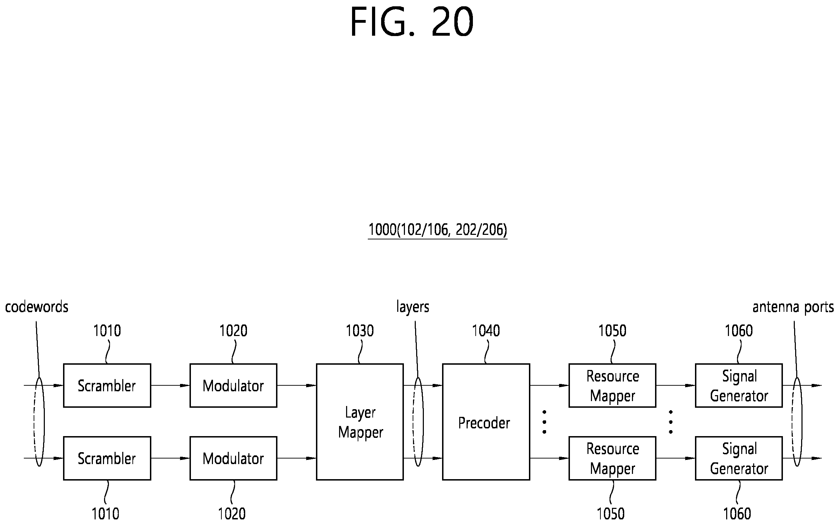

FIG. 20 shows a signal process circuit for a transmission signal, based on an embodiment of the present disclosure. The embodiments of FIG. 20 may be combined with various embodiments of the present disclosure, and among the above embodiments, some description, functions, procedures, proposals, methods, and/or operations may be omitted.

Referring to FIG. 20, a signal processing circuit 1000 may include scramblers 1010, modulators 1020, a layer mapper 1030, a precoder 1040, resource mappers 1050, and signal generators 1060. An operation/function of FIG. 20 may be performed, without being limited to, the processors 102 and 202 and/or the transceivers 106 and 206 of FIG. 19. Hardware elements of FIG. 20 may be implemented by the processors 102 and 202 and/or the transceivers 106 and 206 of FIG. 19. For example, blocks 1010 to 1060 may be implemented by the processors 102 and 202 of FIG. 19. Alternatively, the blocks 1010 to 1050 may be implemented by the processors 102 and 202 of FIG. 19 and the block 1060 may be implemented by the transceivers 106 and 206 of FIG. 19.

Codewords may be converted into radio signals via the signal processing circuit 1000 of FIG. 20. Herein, the codewords are encoded bit sequences of information blocks. The information blocks may include transport blocks (e.g., a UL-SCH transport block, a DL-SCH transport block). The radio signals may be transmitted through various physical channels (e.g., a PUSCH and a PDSCH).

Specifically, the codewords may be converted into scrambled bit sequences by the scramblers 1010. Scramble sequences used for scrambling may be generated based on an initialization value, and the initialization value may include ID information of a wireless device. The scrambled bit sequences may be modulated to modulation symbol sequences by the modulators 1020. A modulation scheme may include pi/2-Binary Phase Shift Keying (pi/2-BPSK), m-Phase Shift Keying (m-PSK), and m-Quadrature Amplitude Modulation (m-QAM). Complex modulation symbol sequences may be mapped to one or more transport layers by the layer mapper 1030. Modulation symbols of each transport layer may be mapped (precoded) to corresponding antenna port(s) by the precoder 1040. Outputs z of the precoder 1040 may be obtained by multiplying outputs y of the layer mapper 1030 by an N*M precoding matrix W. Herein, N is the number of antenna ports and M is the number of transport layers. The precoder 1040 may perform precoding after performing transform precoding (e.g., DFT) for complex modulation symbols. Alternatively, the precoder 1040 may perform precoding without performing transform precoding.

The resource mappers 1050 may map modulation symbols of each antenna port to time-frequency resources. The time-frequency resources may include a plurality of symbols (e.g., a CP-OFDMA symbols and DFT-s-OFDMA symbols) in the time domain and a plurality of subcarriers in the frequency domain. The signal generators 1060 may generate radio signals from the mapped modulation symbols and the generated radio signals may be transmitted to other devices through each antenna. For this purpose, the signal generators 1060 may include Inverse Fast Fourier Transform (IFFT) modules, Cyclic Prefix (CP) inserters, Digital-to-Analog Converters (DACs), and frequency up-converters.

Signal processing procedures for a signal received in the wireless device may be configured in a reverse manner of the signal processing procedures 1010 to 1060 of FIG. 20. For example, the wireless devices (e.g., 100 and 200 of FIG. 19) may receive radio signals from the exterior through the antenna ports/transceivers. The received radio signals may be converted into baseband signals through signal restorers. To this end, the signal restorers may include frequency downlink converters, Analog-to-Digital Converters (ADCs), CP remover, and Fast Fourier Transform (FFT) modules. Next, the baseband signals may be restored to codewords through a resource demapping procedure, a postcoding procedure, a demodulation processor, and a descrambling procedure. The codewords may be restored to original information blocks through decoding. Therefore, a signal processing circuit (not illustrated) for a reception signal may include signal restorers, resource demappers, a postcoder, demodulators, de-scramblers, and decoders.

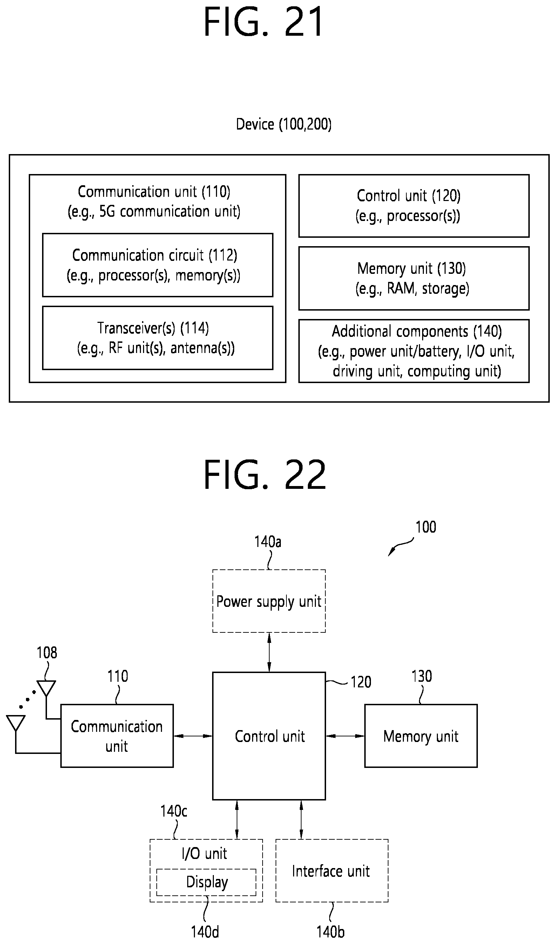

FIG. 21 shows another example of a wireless device, based on an embodiment of the present disclosure. The wireless device may be implemented in various forms depending on use cases/services (see FIG. 18). The embodiments of FIG. 21 may be combined with various embodiments of the present disclosure, and among the above embodiments, some description, functions, procedures, proposals, methods, and/or operations may be omitted.

Referring to FIG. 21, wireless devices 100 and 200 may correspond to the wireless devices 100 and 200 of FIG. 19 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 19. For example, the transceiver(s) 114 may include the one or more transceivers 106 and 206 and/or the one or more antennas 108 and 208 of FIG. 19. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 18), the vehicles (100b-1 and 100b-2 of FIG. 18), the XR device (100c of FIG. 18), the hand-held device (100d of FIG. 18), the home appliance (100e of FIG. 18), the IoT device (100f of FIG. 18), a digital broadcast terminal, a hologram device, a public safety device, an MTC device, a medicine device, a fintech device (or a finance device), a security device, a climate/environment device, the AI server/device (400 of FIG. 18), the BSs (200 of FIG. 18), a network node, etc. The wireless device may be used in a mobile or fixed place according to a use-example/service.

In FIG. 21, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

Hereinafter, an example of implementing FIG. 21 will be described in detail with reference to the drawings.

FIG. 22 shows a hand-held device, based on an embodiment of the present disclosure. The portable device may include a smartphone, a smart pad, wearable devices (e.g., a smartwatch, smart glasses), or a portable computer (e.g., a laptop). The portable device may be referred to as a mobile station (MS), a user terminal (UT), a mobile subscriber station (MSS), a subscriber station (SS), an advanced mobile station (AMS), or a wireless terminal (WT). The embodiments of FIG. 22 may be combined with various embodiments of the present disclosure, and among the above embodiments, some description, functions, procedures, proposals, methods, and/or operations may be omitted.

Referring to FIG. 22, a hand-held device 100 may include an antenna unit 108, a communication unit 110, a control unit 120, a memory unit 130, a power supply unit 140a, an interface unit 140b, and an I/O unit 140c. The antenna unit 108 may be configured as a part of the communication unit 110. Blocks 110 to 130/140a to140c correspond to the blocks 110 to 130/140 of FIG. 21, respectively.

The communication unit 110 may transmit and receive signals (e.g., data and control signals) to and from other wireless devices or BSs. The control unit 120 may perform various operations by controlling constituent elements of the hand-held device 100. The control unit 120 may include an Application Processor (AP). The memory unit 130 may store data/parameters/programs/code/commands needed to drive the hand-held device 100. The memory unit 130 may store input/output data/information. The power supply unit 140a may supply power to the hand-held device 100 and include a wired/wireless charging circuit, a battery, etc. The interface unit 140b may support connection of the hand-held device 100 to other external devices. The interface unit 140b may include various ports (e.g., an audio I/O port and a video I/O port) for connection with external devices. The I/O unit 140c may input or output video information/signals, audio information/-signals, data, and/or information input by a user. The I/O unit 140c may include a camera, a microphone, a user input unit, a display unit 140d, a speaker, and/or a haptic module.

As an example, in the case of data communication, the I/O unit 140c may acquire information/signals (e.g., touch, text, voice, images, or video) input by a user and the obtained information/signals may be stored in the memory unit 130. The communication unit 110 may convert the information/signals stored in the memory into radio signals and transmit the converted radio signals to other wireless devices directly or to a BS. The communication unit 110 may receive radio signals from other wireless devices or the BS and then restore the received radio signals into original information/signals. The restored information/signals may be stored in the memory unit 130 and may be output as various types (e.g., text, voice, images, video, or haptic) through the I/O unit 140c.

**Claims**

1. A method, comprising:

   obtaining, by a first device, from a second device, first sensing data;

obtaining, by the first device, second sensing data,

obtaining, by the first device, based on the second sensing data, information related to an event; and

determining, by the first device, based on the first sensing data, whether the event is valid,

wherein the first sensing data includes a system managing at least one of area information, location information, or object information.

2. The method of claim 1,

wherein the validity for the event is determined based on whether the first sensing data includes the information related to the event.

3. The method of claim 2, further comprising:

reporting, to the second device, based on that the event has been determined to be valid, the information related to the event.

4. The method of claim 2,

wherein, based on that the first sensing data does not include the information related to the event, the event is determined to be valid.

5. The method of claim 2,

wherein, based on that the first sensing data includes the information related to the event and based on that the event satisfies an update condition for the event, the event is determined to be valid.

6. The method of claim 5,

wherein the update condition for the event is related to a time stamp at which the event occurred.

7. The method of claim 6,

wherein the update condition for the event is further related to a validity period for the event.

8. The method of claim 7,

wherein the update condition for the event is further related to an expiration time for the event.

9. The method of claim 8,

wherein the event is related to a no parking and no stopping zone.

10. The method of claim 8,

wherein the system is a high-definition, HD, map.

11. The method of claim 10,

wherein the HD map includes information related to related to a smart crosswalk.

12. The method of claim 8,

wherein the event is related to eithor tollgate bottleneck formation or tollgate bottleneck clearance.

13. The method of claim 8,

wherein information related to an object related to the first sensing data includes information related to an autonomous delivery robot.

14. A first device, comprising:

at least one transceiver;

at least one processor; and

at least one memory connected to the at least one processor and storing instructions that, based on being executed by the at least one processor, cause the first device to perform operations comprising:

obtaining, by a first device, from a second device, first sensing data;

obtaining, by the first device, second sensing data;

obtaining, by the first device, based on the second sensing data, information related to an event; and

determining, by the first device, based on the first sensing data, whether the event is valid,

wherein the first sensing data includes a system managing at least one of area information, location information, or object information.

15. The first device of claim 14, wherein the operations further comprise operations of a method according to any of claims 2 to 13.

# FIG. 1

```
┌─────────────┐                        ┌──────────────┐
│ first device │                        │ second device │
└─────────────┘                        └──────────────┘
       │             synchronization             │
       │◄────────────────────────────────────────│  ⟋S101
       │        system information obtaining      │
       │◄────────────────────────────────────────│  ⟋S103
       │              random access               │
       │◄────────────────────────────────────────│  ⟋S105
       │        control information signaling      │
       │◄────────────────────────────────────────│  ⟋S107
       │        data transmission/reception        │
       │◄────────────────────────────────────────│  ⟋S109
       │                                          │
```

# FIG. 2

# FIG. 3

# FIG. 4

Resource grid

A carrier
(up to 3300 subcarriers,
i.e., 275 RBs)

A BWP

1RB=12 subcarriers

1 RE

1subcarrier

1 symbol

l=0 • • •

k=0

# FIG. 5

PRB N3

$N_{BWP, 2}^{size}$

PRB 1

PRB 0

PRB N2

$N_{BWP, 1}^{size}$

PRB 1

PRB 0

PRB N1

$N_{BWP, 0}^{size}$

PRB 1

PRB 0

CRB 0

$N_{BWP, 0}^{start}$

$N_{BWP, 1}^{start}$

$N_{BWP, 2}^{start}$

Carrier Bandwidth

Freq.

Time

PRB 0 (Point A) in reference resource block

# FIG. 6

EP 4 708 928 A1

FIG. 7

NTN-based communication

AAM
(e.g., UAV)

AAM
(e.g., air-to-ground network)

relay

urban

HIBS

NTN
gateway

rural

remote

Satellite network

NTN
gateway

# FIG. 8a

EP 4 708 928 A1

FIG. 8b

# FIG. 9

(a)

(b)

EP 4 708 928 A1

# FIG. 10

# FIG. 11

EP 4 708 928 A1

# FIG. 12

Smart Manufacturing and Industrial IoT

Environmental Monitoring

Sensing as a Service

Vehicle to Everything

Human Computer Interaction

Smart Home

Remote Sensing

# FIG. 13

(a)  (b)  (c)

(d)  (e)  (f)

EP 4 708 928 A1

# FIG. 14

Evolution to 5G,
while maintaining backward compatibility

Advanced use cases
5G V2X R16

Enhanced safety
C-V2X R14/15

Higher throughput

Higher reliability

Wideband raging
and positioning

Lower latency

Basic safety
802.11p or C-V2X R14

Enhanced range and reliability

Vehicle Platooning

Extended Sensors

Remote Driving

Advanced Driving

EP 4 708 928 A1

# FIG. 15

| first device | second device |

receiving first sensing data → S1510

obtaining second sensing data → S1520

obtaining, based on second sensing data, information related to an event → S1530

determining, based on first sensing data, whether an event is valid → S1540

reporting, based on that a first event is valid, information related to a first event → S1550

# FIG. 16

obtaining, from a second device, first sensing data ~ S1610

obtaining second sensing data ~ S1620

obtaining, based on second sensing data, information related to an event ~ S1630

determining, based on first sensing data, whether an event is valid ~ S1640

# FIG. 17

transmitting, to a first device, first sensing data ~ S1710

receiving, from a first device, a report of information related to an event related to second sensing data ~ S1720

# FIG. 18

EP 4 708 928 A1

# FIG. 19

# FIG. 20

1000(102/106, 202/206)

codewords → 1010 Scrambler → 1020 Modulator → 1030 Layer Mapper → layers → 1040 Precoder → 1050 Resource Mapper → 1060 Signal Generator → antenna ports

1010 Scrambler → 1020 Modulator → Layer Mapper → Precoder → 1050 Resource Mapper → 1060 Signal Generator

# FIG. 21

Device (100,200)

| | |
|---|---|
| **Communication unit (110)**<br>(e.g., 5G communication unit)<br><br>**Communication circuit (112)**<br>(e.g., processor(s), memory(s))<br><br>**Transceiver(s) (114)**<br>(e.g., RF unit(s), antenna(s)) | **Control unit (120)**<br>(e.g., processor(s))<br><br>**Memory unit (130)**<br>(e.g., RAM, storage)<br><br>**Additional components (140)**<br>(e.g., power unit/battery, I/O unit,<br>driving unit, computing unit) |

# FIG. 22

Europäisches
Patentamt

European
Patent Office

Office européen
des brevets

# EUROPEAN SEARCH REPORT

**Application Number**

EP 25 19 9952

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/201442 A1 (HARAN ONN [IL]) 23 June 2022 (2022-06-23) * figures 1,2,4 * * paragraphs [0008] - [0018], [0027] - [0036] * | 1-15 | INV. H04W4/20 H04W4/38 H04W4/40 |
| X | WO 2024/050803 A1 (HUAWEI TECH CO LTD [CN]) 14 March 2024 (2024-03-14) * the whole document * -& EP 4 576 622 A1 (HUAWEI TECH CO LTD [CN]) 25 June 2025 (2025-06-25) * paragraphs [0003] - [0005], [0109] - [0110], [0123] - [0124], [0138] * | 1-15 | |
| X | THANDAVARAYAN GOKULNATH ET AL: "Redundancy Mitigation in Cooperative Perception for Connected and Automated Vehicles", 2020 IEEE 91ST VEHICULAR TECHNOLOGY CONFERENCE (VTC2020-SPRING), IEEE, 25 May 2020 (2020-05-25), pages 1-5, XP033787193, DOI: 10.1109/VTC2020-SPRING48590.2020.9129445 [retrieved on 2020-06-29] * page 1, column 2, last paragraph - page 2, column 1, paragraph first * * paragraph [II.2] * * lines 2-4, paragraph III.1 * * page 3, column 1, paragraph 1 - column 2, paragraph 1 * | 1-15 | TECHNICAL FIELDS SEARCHED (IPC) H04W G08G |

The present search report has been drawn up for all claims

| Place of search | Date of completion of the search | Examiner |
|---|---|---|
| Munich | 6 October 2025 | Jeampierre, Gérald |

## ANNEX TO THE EUROPEAN SEARCH REPORT
## ON EUROPEAN PATENT APPLICATION NO.

EP 25 19 9952

This annex lists the patent family members relating to the patent documents cited in  the above-mentioned European search report.
The members are as contained in the European Patent Office EDP file on
The European Patent Office is in no way liable for these particulars which are merely given for the purpose of information.

06-10-2025

| Patent document cited in search report | Publication date | Patent family member(s) | Publication date |
|---|---|---|---|
| US 2022201442 A1 | 23-06-2022 | NONE | |
| WO 2024050803 A1 | 14-03-2024 | CN 119856428 A<br>EP 4576622 A1<br>WO 2024050803 A1 | 18-04-2025<br>25-06-2025<br>14-03-2024 |
| EP 4576622 A1 | 25-06-2025 | CN 119856428 A<br>EP 4576622 A1<br>WO 2024050803 A1 | 18-04-2025<br>25-06-2025<br>14-03-2024 |